# EUROPÄISCHE PATENTSCHRIFT

(11) **EP 2 958 086 B1**
(45) Veröffentlichungstag und Bekanntmachung des Hinweises auf die Patenterteilung: **01.09.2021**
(21) Anmeldenummer: 15172242.8
(22) Anmeldetag: 16.06.2015
(51) Int. Cl.: G06F 21/32, G06F 21/35, G06F 16/245, G06F 16/93, G06T 7/73, G07C 9/25, G02B 17/00, G06F 1/16

(54) **VERFAHREN ZUR PRÜFUNG EINES SICHERHEITSDOKUMENTS**
METHOD FOR TESTING A SECURITY DOCUMENT
PROCÉDÉ DE CONTRÔLE D'UN DOCUMENT DE SÉCURITÉ

(30) Priorität: 18.06.2014 DE 102014108578
(43) Veröffentlichungstag der Anmeldung: 23.12.2015
(73) Patentinhaber: OVD Kinegram AG, 6300 Zug (CH)
(72) Erfinder: KARRER WALKER, Reto, 6314 Unterägeri (CH); SCHILLING, Andreas, 6332 Hagendorn (ZG) (CH)
(74) Vertreter: Louis Pöhlau Lohrentz

(56) Entgegenhaltungen:
- WO-A1-2013/128019
- US-A1- 2012 075 168
- US-A1- 2013 069 985
- US-A1- 2014 125 558

## Beschreibung

Die Erfindung betrifft ein Verfahren zur Prüfung eines Sicherheitsdokuments, die Verwendung eines Augmented-Reality-Systems zur Prüfung eines Sicherheitsdokuments, sowie ein Augmented-Reality-System.

Sicherheitsdokumente sind in vielen Bereichen des öffentlichen, staatlichen und privaten Sektors verbreitet. So beinhalten beispielsweise Personalausweise bzw. Reisepässe eine Vielzahl von unterschiedlichen Informationen, wie Daten des Ausweishalters, Sicherheitselemente zur Erhöhung der Fälschungssicherheit oder auf einem Chip gespeicherte biometrische Daten, welche bei Kontrollen seitens des Kontrolleurs überprüft werden müssen. So sind bei einem Prüfprozess neben personenbezogenen Daten, auch beispielsweise die Sicherheitselemente des Sicherheitsdokuments zu prüfen, um eine Fälschung oder Manipulation des Sicherheitsdokuments zu erkennen.

Durch die große Anzahl an Informationen, die Sicherheitsdokumente aufweisen, und den relativ großen Zeitdruck bei der Dokumentenkontrolle (typischerweise ca. 15 - 20 Sekunden pro Dokument), ist eine zuverlässige Überprüfung des gesamten Dokuments nicht immer möglich. Auch wenn eine Vielzahl von Sicherheitsdokumenten kontrolliert werden muss, beispielsweise im Rahmen von Grenzkontrollen oder an Flughäfen, ist eine umfassende Inspektion des Sicherheitsdokuments durch einen Kontrolleur nicht zweckmäßig, da aufgrund der Vielzahl der Informationen des Sicherheitsdokuments nicht alle Informationen hinreichend überprüft werden können. Auch ist es aufgrund der Vielzahl der verschiedenen Sicherheitsdokumente, wie beispielsweise Reisepässe verschiedener Staaten, oftmals schwierig, jeweils genaue Kenntnis über alle Informationen eines solchen Sicherheitsdokuments zu erlangen.

Es sind ferner Systeme zur automatischen Authentifizierung von Sicherheitselementen bekannt, jedoch beschränken sich diese Systeme vornehmlich auf die Authentifizierung von Sicherheitselementen eines Dokuments und lassen weitere Informationen außer Acht. Auch handelt es sich hierbei um stationäre Anlagen, welche sich besonders gut zur Überprüfung großer Mengen von identischen Objekten, wie beispielsweise Banknoten, eignen.

Der Erfindung liegt nun die Aufgabenstellung zugrunde, die Prüfung eines Sicherheitsdokuments zu verbessern.

Diese Aufgabe wird durch ein Verfahren mit den Merkmalen des Patentanspruchs 1 sowie durch die Verwendung eines Augmented-Reality-Systems zur Prüfung eines Sicherheitsdokuments des Patentanspruchs 14 und einem Augmented-Reality-System mit den Merkmalen des Patentanspruchs 15 gelöst.

Im Folgenden soll die Abkürzung AR-System für Augmented-Reality-System stehen und verwendet werden.

Bei einem solchen Verfahren zur Prüfung eines Sicherheitsdokuments, insbesondere eines Ausweisdokuments, eines Visums, eines Geburts-Zertifikats, einer Banknote, eines Wertpapiers oder einer Kreditkarte, werden die folgenden Schritte durchgeführt:
- Erfassen von ein oder mehreren ersten Informationen des Sicherheitsdokuments mittels eines AR-Systems, insbesondere einer Datenbrille, eines Tablets, eines Smartphones oder eines PDAs;
- Überprüfen der ein oder mehreren ersten Informationen durch Abgleich mit einer Datenbank;
- Speicherung von ein oder mehreren Ergebnissen der Überprüfung der ein oder mehreren ersten Informationen und/oder Ausgabe von ein oder mehreren Ergebnissen der Überprüfung der ein oder mehreren ersten Informationen mittels des AR-Systems.

Zur Durchführung eines solchen Verfahrens wird ein AR-System, insbesondere eine Datenbrille, ein Tablet, ein Smartphone oder ein PDA, zur Prüfung eines Sicherheitsdokuments, insbesondere eines Ausweisdokuments, eines Visums, eines Geburts-Zertifikats, einer Banknote, eines Wertpapiers oder einer Kreditkarte, verwendet, das die folgenden Komponenten aufweist:
- ein oder mehrere Erfassungseinrichtungen zur Erfassung von ein oder mehreren ersten Informationen des Sicherheitsdokuments;
- eine Steuervorrichtung, wobei die Steuervorrichtung derart ausgestaltet ist, dass diese die ein oder mehreren ersten Informationen durch Abgleich mit einer Datenbank überprüft und ein oder mehrere der Ergebnisse der Überprüfung der ein oder mehreren ersten Informationen speichert und/oder ausgibt.

Dies ermöglicht eine ganzheitliche Erfassung des Sicherheitsdokuments sowie eine ganzheitliche Überprüfung einer Vielzahl von Informationen des Sicherheitsdokuments innerhalb kurzer Zeit. So können die personenbezogenen Daten, wie beispielsweise das Foto und der Name und die Adresse des Dokumenthalters direkt durch Abgleich mit einer Datenbank überprüft werden. Treten bei dieser Überprüfung Unstimmigkeiten oder Hinweise auf, können diese als Ergebnis der Überprüfung ausgeben werden. So kann beispielsweise direkt geprüft werden, ob es sich bei einer kontrollierten Person um eine gesuchte Person handelt. So können die Ergebnisse entsprechend der Relevanz für den entsprechenden Prüfprozess ausgegeben werden, so dass beispielsweise bei Personenkontrollen, zuerst ausgegeben wird, dass es sich um eine gesuchte Person handelt. Auch ist ein effizientes und schnelles Überprüfen einer Vielzahl von unterschiedlichen Sicherheitsdokumenten möglich. Der Umfang der Prüfung ist im Vergleich zu einer Prüfung durch eine Kontrollperson so zum einen umfassender, da eine Vielzahl von erfassten Informationen überprüft werden, und zum anderen schneller und sicherer, da die erfassten Informationen direkt durch einen Abgleich mit einer Datenbank überprüft werden. Dies ermöglicht eine benutzerfreundlichere und intuitivere Prüfung im Vergleich zu oben genannten Authentifizierungssystemen.

Unter Erfassen wird hierbei das Detektieren der ein oder mehreren Informationen mittels geeigneter Sensoren verstanden. Beispielsweise können die ein oder mehreren Informationen nach der Erfassung mittels der geeigneten Sensoren in analoger oder digitaler Form vorliegen. Bevorzugt werden die ein oder mehreren Informationen beispielsweise mittels AD-Wandlern (AD = Analog/Digital) in digitale Signale verwandelt, um dann mit der Datenbank abgeglichen zu werden.

Beispielsweise kann die Erfassung der ein oder mehreren Informationen erfolgen, sobald beispielsweise ein entsprechender Sensor, wie beispielsweise eine Kamera, das Sicherheitsdokument erfasst bzw. detektiert hat. Ebenfalls ist es möglich, dass der Anwender durch manuelles Betätigen einer Vorrichtung, bevorzugt einer berührungsempfindlichen Vorrichtung, wie beispielsweise einem Touchscreen, die Erfassung der ein oder mehreren Informationen auslöst. Ebenfalls ist es möglich, dass das AR-System beispielsweise sprachgesteuert ist und die Erfassung der ein oder mehreren Informationen durch Sprachbefehle ausgelöst wird. Ebenfalls ist möglich, dass für den Anwender in einem Anzeigebereich beispielsweise Barcodes mit hinterlegten Programmen/Abläufen zur Verfügung stehen. Auch ist eine Erfassung möglich, bei der beispielsweise Orientierungs-Rahmen eingeblendet werden und durch manuelles Auslösen die entsprechende Information erfasst wird.

Unter Informationen werden hierbei verschiedene Merkmale, insbesondere des Sicherheitsdokuments verstanden, die einen Informationsgehalt aufweisen. Es ist jedoch auch möglich, dass die Informationen bzw. Merkmale beispielsweise Informationen des Dokumentenhalters sind. So kann beispielsweise ein Foto von dem Dokumentenhalter aufgenommen werden und die physiologischen Merkmale des Dokumentenhalters bestimmt werden. Ebenfalls können beispielsweise Merkmale der Umgebung während des Prüfprozesses als weitere Informationen erfasst werden. So kann beispielsweise das Kfz-Kennzeichnen eines Fahrzeuges als Information bzw. Merkmal mit erfasst werden. Neben den bereits erwähnten Informationen können selbstverständlich weitere Informationen erfasst werden.

Unter Abgleich wird hierbei das Überprüfen von Informationen, beispielsweise der ein oder mehreren ersten Informationen und zugeordneten Informationen der Datenbank, auf Gleichheit, Übereinstimmung und/oder den Grad der Übereinstimmung, oder auf Vorliegen der ein oder mehreren Informationen verstanden. So kann beispielsweise ein erfasstes Bild daraufhin geprüft werden, ob dieses mit einem in der Datenbank hinterlegten Bild übereinstimmt oder ob Unterschiede vorliegen. Falls die erfassten Informationen nicht in der Datenbank vorliegen, können diese Informationen in der Datenbank gespeichert werden und zu weiteren Überprüfungen verwendet werden. Ergibt so beispielsweise der Abgleich mit der Datenbank, dass die erfassten Informationen nicht in der Datenbank vorliegen, so können die erfassten Informationen in der Datenbank gespeichert werden, um beispielsweise für weitere Abgleiche verwendet zu werden.

Unter AR-System soll dabei jegliches Gerät verstanden werden, welches die Wahrnehmung eines Anwenders mittels technischer Hilfsmittel erweitert. Neben der bereits erwähnten Datenbrille, dem Tablet, dem Smartphone oder dem PDA können selbstverständlich auch andere Geräte verwendet werden. Beispielsweise ist es auch möglich, anstelle der genannten Vielzweckgeräte Geräte zu verwenden, die spezifisch nur für die Durchführung dieses Verfahrens konstruiert sind. Beispielsweise kann eine vorhandene Datenbrille durch Anpassung der Software und/oder Hardware an die Durchführung des erfindungsgemäßen Verfahrens angepasst werden.

Die Steuerungseinrichtung des AR-Systems weist vorzugsweise eine Vorrichtung zur Kommunikation mit der Datenbank auf. So kann das AR-System beispielsweise eine Schnittstelle zur drahtlosen oder drahtgebundenen Kommunikation mit der Datenbank aufweisen.

Weitere vorteilhafte Ausgestaltungen der Erfindung sind in den Unteransprüchen bezeichnet.

Gemäß einem bevorzugten Ausführungsbeispiel der Erfindung werden vor und/oder während des Erfassen von ein oder mehreren ersten Informationen des Sicherheitsdokuments mittels des AR-Systems, insbesondere einer Datenbrille, Instruktionen angezeigt, in welcher Relativlage und/oder in welchem Abstand zum AR-System das Sicherheitsdokument während des Erfassens der ein oder mehreren ersten Informationen zu halten und/oder zu bewegen ist. Damit kann sichergestellt werden, dass auch ungeübte Benutzer die ein oder mehreren ersten Informationen des Sicherheitsdokuments mittels des AR-Systems zuverlässig erfassen können. Sollten die ein oder mehreren ersten Informationen mittels des AR-Systems nicht geeignet erfasst werden können, so können dem Anwender auch zusätzliche Informationen angezeigt werden, die ihn beispielsweise auf einen Fehler aufmerksam machen und ihn instruieren, wie dieser zu vermeiden ist. Dem Anwender können auch weitere zusätzliche konkrete Hinweise angezeigt werden, anhand welcher Merkmale er Fälschungen erkennen kann.

Vorzugweise wird der Abstand des Sicherheitsdokuments und des AR-Systems mittels des AR-Systems, insbesondere durch Laufzeitmessungen, bestimmt. So kann beispielsweise der Abstand des Sicherheitsdokuments und des AR-Systems mittels optischer, beispielsweise durch Verwendung eines Lasers, oder akustischer, beispielsweise durch Verwendung von Ultraschall, Laufzeitmessungen bestimmt werden. Neben der bereits erwähnten optischen und akustischen Laufzeitmessung zur Bestimmung des Abstands des Sicherheitsdokuments und des AR-Systems können selbstverständlich weitere Messmethoden, wie beispielsweise Laufzeitmessungen mittels elektromagnetischer Wellen im Funkwellenlängenbereich oder interferometrische Messmethoden, verwendet werden.

Gemäß einem weiteren bevorzugten Ausführungsbeispiel der Erfindung umfassen die ein oder mehreren ersten Informationen des Sicherheitsdokuments Informationen über Sicherheitsmerkmale, Fotos, kodierte Kennungen und personenbezogene Daten, insbesondere Name, Adresse und Geburtsdatum.

Vorzugsweise umfassen die ein oder mehreren ersten Informationen Informationen über das optische Erscheinungsbild von optisch variablen Sicherheitsmerkmalen des Sicherheitsdokuments, welche durch Reliefstrukturen, insbesondere diffraktive Strukturen, Beugungsstrukturen Nullter Ordnung, Blazegitter, lineare oder gekreuzte Sinusgittergitterstrukturen, Binärgitterstrukturen oder Multilevelgitterstrukturen, Freiformlinsenstrukturen, Makrostrukturen, insbesondere Linsenstrukturen oder Mikroprismenstrukturen, Spiegelflächen, Mattstrukturen, insbesondere anisotrope oder isotrope Mattstrukturen oder Kombinationen dieser Strukturen optisch erfassbar generiert werden. Im Weiteren können optisch variable Sicherheitsmerkmale einzeln oder in Kombination mit den vorgenannten Reliefstrukturen auch Volumenhologramme, Flüssigkristallschichten, Elemente auf Basis von Fabry-Perot-Dreischichtaufbauten zur Erzeugung von blickwinkelabhängigen Farbverschiebungseffekten umfassen oder auch Sicherheitspigmente oderfarbstoffe beinhalten. Diese Sicherheitspigmente oder -farbstoffe können entweder unter sichtbarem Licht und/oder UV-Licht und/oder IR-Licht unterschiedliche optische Effekte, insbesondere optisch variable Effekte erzeugen oder auch nur bei Bestrahlung mit Licht aus einem bestimmten Wellenlängenbereich für das menschliche Auge sichtbar sein. Beispiele sind UV-aktive oder IR-aktive Pigmente oder OVI®-Pigmente. Diese Sicherheitspigmente oder -farbstoffe können mit bekannten Druckverfahren wie Offsetdruck, Tiefdruck, Intaglio-Druck oder Siebdruck partiell oder vollflächig aufgebracht werden. Beispielsweise können damit auch feinlinige Sicherheitsmuster wie beispielsweise komplexe Guillochenmuster oder andere Motive gebildet werden. Optische Sicherheitsmerkmale können ebenso durch Wasserzeichen oder durch metallische oder nichtmetallische Reflexionsschichten gebildet sein. Diese Reflexionsschichten, einzeln oder in Kombination mit anderen Sicherheitsmerkmalen, können aufgedruckt oder aufgedampft sein und vollflächig oder partiell, insbesondere mit besonders fälschungssicheren feinziselierten Formgebungen und Motiven ausgebildet sein. Derartig ausgestaltete Sicherheitsdokumente weisen eine besonders hohe Fälschungssicherheit auf.

Weiter ist es auch möglich, dass als ein oder mehrere der ersten Informationen ein oder mehrere Symbole, Logos, Bilder, Zeichen, alphanumerischen Charaktere oder Zahlen erfasst werden.

Gemäß einem weiteren bevorzugten Ausführungsbeispiel der Erfindung wird beim Erfassen der ein oder mehreren ersten Informationen ein oder mehrere der ersten Informationen optisch, elektromagnetisch, magnetisch, elektrisch und/oder elektronisch maschinell aus dem Sicherheitsdokument ausgelesen. Hierdurch wird erreicht, dass das Sicherheitsdokument möglichst ganzheitlich automatisch erfasst wird. Neben den optischen Informationen umfassen Sicherheitsdokumente häufig weitere Merkmale, welche beispielsweise in elektrisch leitfähigen Bereichen des Sicherheitsdokuments eingebracht sind. Auch weisen Sicherheitsdokumente beispielsweise häufig maschinenlesbare Bereiche auf, welche derart ausgestaltet sind, dass diese mittels optischer Texterkennung ausgelesen werden können.

Weiter ist es von Vorteil, wenn der Schritt des Auslesens das Auslesen aus ein oder mehreren, insbesondere elektronischen Speichermedien des Sicherheitsdokuments, beispielsweise einem Speicher-Chip umfasst. Hierdurch können zusätzliche, optisch nicht erfassbare Informationen des Sicherheitsdokuments erfasst werden. So ist es beispielsweise möglich, ein Foto, welches auf einem oder mehreren Speichermedien des Sicherheitsdokuments gespeichert ist, mit einem Foto des Sicherheitsdokuments zu vergleichen und damit die Prüfung des Sicherheitsdokuments weiter zu verbessern. Im Weiteren können hier weitere Informationen, die zur Überprüfung des Sicherheitsdokuments hilfreich sind, zur Verfügung gestellt werden, wie beispielsweise Überprüfungsvorschriften zu hochsicheren Sicherheitselementen des Sicherheitsdoku ments.

Vorzugweise enthalten die ein oder mehreren Speichermedien biometrische Daten. Hierdurch kann ein besonders effizienter Vergleich beispielsweise mit einem biometrischen Foto des Sicherheitsdokuments ermöglicht werden, da biometrische Daten, wie beispielsweise biometrische Passbilder häufig bestimmte Anforderungen erfüllen, die zur erleichterten Gesichtserkennung anhand des Bildes beitragen. Unter biometrischen Informationen werden dabei Informationen verstanden, welche der Personenidentifikation dienen. Neben der bereits erwähnten biometrischen Information zur Gesichtserkennung betreffen beispielsweise die Körpermaße oder die Fingerabdrücke oder die Iris des menschlichen Auges oder der Verlauf der Handvenen ebenfalls biometrische Informationen.

Weiter ist es auch möglich, dass die ein oder mehreren Speichermedien mittels elektromagnetischer Wellen, insbesondere eines RFID-Lesegeräts, ausgelesen werden. Dies ermöglicht ein schnelles und berührungsloses Auslesen der ein oder mehreren Speichermedien.

Weiter ist es vorteilhaft, dass der Schritt des Auslesens das Auslesen von nicht für den menschlichen Betrachter visuell erkennbaren ein oder mehreren optischen ersten Informationen umfasst, welche insbesondere mit einem oder mehreren Bilderfassungssystemen, vorzugsweise IR-Kameras, maschinell auslesbar sind. Unter visuell nicht erkennbar soll dabei verstanden werden, dass die ein oder mehreren ersten Informationen bei einem üblichen Betrachtungsabstand von etwa 30 cm, bevorzugt von 10 bis 50 cm, und bei einer üblichen Beleuchtungsstärke von 1000 lx, bevorzugt von 10 lx bis 10000 lx vom menschlichen Auge nicht aufgelöst werden kann bzw. dass die ein oder mehreren ersten Informationen in einem Spektralbereich liegen, welcher außerhalb des für das menschliche Auge sichtbaren Bereichs liegt. Hierdurch wird erreicht, dass ein oder mehrere erste Informationen erfasst werden, welche durch eine rein visuelle Inspektion nicht wahrgenommen werden können. Somit wird beispielsweise die Überprüfung, insbesondere in kurzer Zeitdauer, verbessert.

Weiter ist es vorteilhaft, wenn zumindest eine der Erfassungseinrichtungen des AR-Systems elektromagnetische Wellen im Wellenlängenbereich von 200 nm bis 50 µm, bevorzugt 380 nm bis 3 µm detektiert. Durch eine derartige Ausgestaltung wird erreicht, dass Spektralbereiche außerhalb des für das menschliche Auge sichtbaren Bereichs, insbesondere im UV- und IR- Bereich, und im für das menschliche Auge sichtbaren Spektralbereich erfasst werden. Die Erfassung der oben genannten Spektralbereiche ermöglicht beispielsweise eine Überprüfung des Sicherheitsdokuments mittels einer Spektralanalyse. Hierzu wird beispielsweise ein Wellenlängenbereich von 380 nm bis 3 µm mittels einer Erfassungseinrichtung detektiert. Basierend auf dem erfassten Wellenlängenbereich wird eine Spektralanalyse durchgeführt. Diese wird beispielsweise mittels einer schnellen Fourier-Transformation durchgeführt. Die entsprechenden Spektralanteile können im Weiteren durch ein Schwellenwertverfahren ermittelt werden und mit in der Datenbank gespeicherten Spektralanteilen des zu prüfenden Sicherheitsdokuments abgeglichen werden. Des Weiteren kann beispielsweise die Helligkeitsverteilung, eine Analyse des Farbraums, der Farbtemperatur oder des Druckbilds der Personalisierung (z. B. Pixelierung) der ein oder mehreren der erfassten optischen ersten Informationen zur Überprüfung des Sicherheitsdokuments verwendet werden.

Bei der oben genannten Überprüfung eines Sicherheitsdokuments, insbesondere eines Reisepasses, zur Personenidentifikation können die ein oder mehreren ersten Informationen des Sicherheitsdokuments neben den bereits oben genannten Informationen wie beispielsweise das Foto, der Name des Dokumentenhalters oder die Sicherheitselemente des Sicherheitsdokuments auch weitere Einträge in den Reisepass wie beispielsweise Visa oder andere Kontrollstempel sein. So wird z. B. im Falle eines Reisepasses nicht nur das eigentliche Sicherheitsdokument überprüft, sondern auch ggf. vorkommende Ergänzungen bzw. Einträge innerhalb des Reisepasses.

Des Weiteren ist es möglich, dass es sich bei dem Sicherheitsdokument um einen Kofferanhänger oder um ein Flugticket handelt. Bei den ein oder mehreren ersten Informationen kann es sich beispielsweise um einen Barcode der Zugehörigkeit des Gepäckstücks, den Aufgabeort oder die Zuordnung zu dem Dokumentenhalter handeln. Diesen ein oder mehreren ersten Informationen können bei der Überprüfung wie weiter unten beschrieben ein oder mehrere Zusatzinformationen zugeordnet werden.

Gemäß einem bevorzugten Ausführungsbeispiel der Erfindung werden ein oder mehrere zweite Informationen des Dokumentenhalters, insbesondere des Ausweisträgers, mittels des AR-Systems erfasst. Die Erfassung von ein oder mehreren zweiten Informationen des Dokumentenhalters ermöglicht es weiter die Überprüfung des Sicherheitsdokuments zu verbessern, da neben den ein oder mehreren ersten Informationen des Sicherheitsdokuments die ein oder mehreren zweiten Informationen des Dokumentenhalters auf Übereinstimmungen bzw. Abweichungen verglichen werden können. So kann beispielsweise überprüft werden, ob der Dokumentenhalter mit der Person, für welche das Sicherheitsdokument ausgestellt wurde, identisch ist. Auch können Abweichungen der anatomischphysiologischen Merkmale des Dokumenthalters eingeblendet werden, was die Handhabung und den Prüfprozess erleichtert und entsprechend beschleunigt.

Vorzugweise sind die ein oder mehreren zweiten Informationen des Dokumentenhalters biometrische Informationen, insbesondere des Kopfes, und werden durch einen Bildverarbeitungsalgorithmus, insbesondere Gesichtserkennungsalgorithmus, bestimmt.

Weiter ist es auch möglich, dass die ein oder mehreren zweiten Informationen ein oder mehrere Parameter umfassen, die eine Pathognomik, Physiognomik und/oder Physiologik des Dokumententrägers spezifizieren. Die Pathognomik betrifft hierbei die Stimmungslage, die Physiognomik die Gesichtszüge und die Physiologik die Gefühlsregungen des Dokumententrägers, welche beispielsweise durch Anpassung der Software und/oder Hardware des AR-Systems bestimmt werden können. Neben den bereits erwähnten Bereichen der Pathognomik, der Physiognomik und/oder der Physiologik können selbstverständlich weitere Kriterien verwendet werden. Durch derartige Informationen wird es ermöglicht, das Stimmungsbild des Dokumentenhalters zu bestimmen und Auffälligkeiten bzw. Hinweise dem Anwender auszugeben. Hierdurch kann diese Art von Informationen (Pathognomik, Physiognomik, Physiologik) um ein Vielfaches effektiver, zielführender und objektiver durchgeführt werden. Werden diese Informationen hingegen beispielsweise von Grenzwächtern bestimmt, um Hinweise auf verdächtige Personen zu erhalten, hängt ein erfolgreiches Bestimmen dieser Informationen stark von der persönlichen Begabung/Erfahrung/Intuition des Grenzwächters ab.

Vorzugsweise werden bei der Überprüfung der ein oder mehreren ersten Informationen die ein oder mehreren ersten Informationen oder ein oder mehrere Informationen aus der Datenbank mit den ein oder mehreren zweiten Informationen abgeglichen. Vorzugsweise findet dieser Abgleich in der Datenbank statt. Es ist jedoch auch möglich, dass der Abgleich beispielsweise mittels des AR-Systems durchgeführt wird, so dass die ein oder mehreren zweiten Informationen nicht zur Datenbank mittels einer geeigneten Vorrichtung übermittelt werden müssen.

Gemäß einem weiteren bevorzugten Ausführungsbeispiel der Erfindung werden ein oder mehrere der erfassten ersten Informationen mittels des AR-Systems, insbesondere in visueller, akustischer und/oder fühlbarer Form, insbesondere vor Durchführung der Überprüfung, ausgegeben. Dies ermöglicht die Darstellung der ein oder mehreren ersten Informationen bezüglich einer Priorisierung beispielsweise in Abhängigkeit der durchgeführten Überprüfung. So können beispielsweise die ein oder mehreren ersten Informationen entsprechend ihrer Relevanz ausgegeben werden. Dies ermöglicht eine benutzerfreundliche und schnelle Durchführung des Prüfprozesses.

Vorzugsweise überlagert das AR-System ein oder mehrere der Ergebnisse der Überprüfung dem Sicherheitsdokument optisch mittels einer optischen Einblendung. Eine derartige Ausgestaltung ermöglicht es, die Ergebnisse der Überprüfung für einen Anwender direkt optisch darzustellen und Unstimmigkeiten bzw. Widersprüche auf dem Sicherheitsdokument zu visualisieren. So können beispielsweise abweichende Sicherheitsmerkmale des Sicherheitsdokuments oder Abweichungen bezüglich der personenbezogenen Daten eingeblendet werden. Hierdurch wird eine benutzerfreundliche Handhabung erreicht. Auch wird hierdurch für den Anwender beispielsweise eine bessere Kontrolle der Prüfung erreicht, da Ergebnisse der Überprüfung entsprechend ihrer Relevanz gewertet werden können.

Weiter ist es auch möglich, dass ein oder mehrere der Ergebnisse der Überprüfung, die mittels der optischen Einblendung dem Sicherheitsdokument überlagert sind, Informationen über Unstimmigkeiten/Widersprüche auf dem Sicherheitsdokument, unstimmige Sicherheitsmerkmale, inhaltliche Informationen oder anatomisch-physiologische Merkmale umfassen. Mit anderen Worten enthalten die optischen Einblendungen, welche die Ergebnisse der Überprüfung darstellen, Angaben über Unstimmigkeiten/Widersprüche auf dem Sicherheitsdokument, unstimmige Sicherheitsmerkmale, inhaltliche Informationen oder anatomisch-physiologische Merkmale.

Weiter ist es möglich, dass nach dem Schritt des Überprüfens der ein oder mehreren der erfassten Informationen, das Ergebnis der Überprüfung lediglich dann ausgegeben wird, wenn das Ergebnis der Überprüfung ein für den Nutzer nützlicher Hinweis, beispielsweise ein Verdacht auf eine Fälschung, ist. So kann eine ganze Reihe von Informationen analysiert und im Hintergrund ausgewertet werden, ohne dass dem Nutzer alle Details im Einzelnen ausgeben werden. Bei einem hinreichenden Verdacht genügt es, wenn der Nutzer beispielsweise einen Warnhinweis bekommt, dass in einem bestimmten Fall eine vertiefte Prüfung der Identität erforderlich ist. Diese vertiefte Prüfung kann dann mit weiteren Hilfsmitteln separat erfolgen und kann ggf. mehr Zeit/Hilfsmittel in Anspruch nehmen.

Gemäß einem weiteren bevorzugten Ausführungsbeispiel der Erfindung weist das AR-System eine Ausgabevorrichtung, insbesondere einen Infoscreen einer Datenbrille, ein Head-up-Display oder einen Bildschirm, auf. Unter einem Head-up-Display wird dabei eine Ausgabevorrichtung verstanden, die Informationen in das Sichtfeld des Anwenders projiziert. Beispielsweise können durch die Verwendung eines Bildschirms die mittels des erfindungsgemäßen Verfahrens erfassten Informationen oder Ergebnisse weiteren Anwendern verfügbar gemacht werden.

Weiter ist es vorteilhaft, dass ein oder mehrere der Ergebnisse der Überprüfung der ein oder mehreren ersten Informationen des Sicherheitsdokuments mittels des AR-Systems in visueller, akustischer und/oder fühlbarer Form ausgegeben werden. Hierdurch wird es ermöglicht, dem Anwender die Ergebnisse des Prüfprozesses zeitnah entsprechend einer möglichen Priorisierung der Ergebnisse mitzuteilen. Ergibt beispielsweise der Abgleich der ein oder mehreren ersten Informationen des Sicherheitsdokuments mit der Datenbank, dass diese nicht übereinstimmen, so kann beispielsweise ein akustischer oder visueller Vorabhinweis bezüglich der Unstimmigkeit erfolgen. Auch kann beispielsweise durch eine Ausgabe in fühlbarer Form die Aufmerksamkeit des Anwenders erhöht werden.

Gemäß einem weiteren bevorzugten Ausführungsbeispiel der Erfindung, wird als Ergebnis der Überprüfung der ein oder mehreren ersten Informationen eine Klassifizierung auf Echtheit, insbesondere eine Echtheitswahrscheinlichkeit, erstellt. Um ein untersuchtes Sicherheitsdokument als echt zu klassifizieren, muss bei Abgleich der einen oder mehreren ersten Informationen mit der Datenbank nicht zwingend eine absolute Übereinstimmung vorliegen, es ist auch möglich, Toleranzbereiche für erlaubte Abweichungen vorzugeben. Dies gilt insbesondere für optisch erfasste Informationen wie beispielsweise Fotos oder Sicherheitsmerkmale. Abweichungen müssen nicht unbedingt auf eine Fälschung hindeuten, da auch optische Artefakte, perspektivische Verzerrungen, Abnutzung oder Verschmutzung des Sicherheitsdokuments im Gebrauch, Abschirmungen eines Speichermediums des Sicherheitsdokuments oder ähnliche Effekte, bei dem Erfassen der einen oder mehreren ersten Informationen auftreten können, die den Abgleich mit der Datenbank beeinträchtigen können. Um solche Abweichungen zu verringern, ist es vorteilhaft, wenn Hilfsmittel vorgesehen sind, um dem Benutzer die Durchführung des erfindungsgemäßen Verfahrens zu erleichtern. Beispielsweise kann das AR-System ein oder mehrere Orientierungs-Rahmen abbilden, in welchen das Sicherheitsdokument oder Teile des Sicherheitsdokuments platziert werden sollten. Alternativ oder ergänzend dazu können weitere optische Hilfsmittel oder Anzeigen vorgesehen sein, um beispielsweise perspektivische Verzerrungen und/oder Verdrehungen zu verringern. Beispielsweise können das bewegliche Fadenkreuze, Passermarken oder Registermarken oder andere Elemente sein, die mittels Bewegung des Sicherheitsdokuments relativ zueinander positioniert werden sollen. Dies erschwert zwar die Anwendung des Verfahrens für den Benutzer, kann aber die Erkennungsrate für das Sicherheitsdokument verbessern.

Die Überprüfung der ein oder mehreren ersten Informationen auf Echtheit kann verbessert werden, wenn von dem Sicherheitsdokument eine Bildfolge mit mehreren Einzelbildern optisch erfasst wird. Danach wird überprüft, ob zumindest eine vorgegebene der ein oder mehreren ersten Informationen in zumindest einem Einzelbild der Bildfolge vorliegt.

Vorzugsweise umfasst die Bildfolge eine Vielzahl von Einzelbildern des Sicherheitsmerkmals, insbesondere mehr als 2 Einzelbilder des Sicherheitsmerkmals. Ferner ist bevorzugt, wenn jedes Einzelbild mehr als 480 x 320 Pixel, insbesondere mehr als 1920 x 1280 Pixel, aufweist.

Die Bildfolge kann dabei eine Mehrzahl von diskret erstellten Einzelbildern sein, die in keinem zeitlichen Zusammenhang stehen, es kann sich aber auch um einen Film handeln, also aus Einzelbildern bestehen, die in einem vorgegebenen zeitlichen Abstand, insbesondere mit einer Aufnahmefrequenz von 5 bis 60 Bildern pro Sekunde, aufgenommen sind.

In einer bevorzugten Ausführungsform wird anhand zumindest zweier Einzelbilder der Bildfolge überprüft, ob das Sicherheitsdokument eine optisch variable Struktur (Sicherheitselement) als Sicherheitsmerkmal umfasst. Dies ermöglicht es, ein authentisches Sicherheitselement von einer Kopie (z. B. einer Farbkopie) zu unterscheiden, die lediglich eine statische - also nicht optisch variable - Repräsentation der zumindest einen vorgegebenen optischen Information aufweist. Hierbei ist es vorteilhaft, die Zugehörigkeit des jeweiligen Einzelbilds explizit zu überprüfen oder einen vorgegebenen zeitlichen Abstand zwischen zwei Einzelbildern als Bedingung zu definieren, damit ein Anwender nicht zwei separate Einzelbilder als Täuschung verwenden kann, um eine optische Variabilität vorzutäuschen.

Weiterhin kann die optisch erfasste Information in mehrere Teilbereiche zerlegt werden und anschließend die jeweiligen Teilbereiche analysiert werden.

Weiterhin kann während der optischen Erfassung der der ein oder mehreren ersten Informationen ein Winkel zwischen der Erfassungseinrichtung und dem Sicherheitsdokument und/oder ein Winkel zwischen einer Lichtquelle (z. B. einer Blitzleuchte des AR-Systems) und dem Sicherheitsdokument verändert werden. Unter dem Winkel zwischen einer Lichtquelle und dem Sicherheitsdokument ist der Einfallswinkel des Lichts zu verstehen, der das Sicherheitsdokument beleuchtet, zur Flächennormalen des Sicherheitsdokuments. Wenn die Lichtquelle des AR-Systems benutzt wird, ist der Einfallswinkel des Lichts relativ genau übereinstimmend mit der optischen Achse der Erfassungseinrichtung (vom Sicherheitsdokument durch eine Linse der Erfassungseinrichtung zu deren Bildsensor laufend). Falls das Sicherheitsdokument ein optisch variables Sicherheitselement aufweist, verändert sich bei der Veränderung des Betrachtungswinkels und/oder Beleuchtungswinkels auch dessen erfassbare/messbare Erscheinungsbild. Auf diese Weise kann zunächst verifiziert werden, ob das in der Bildfolge erfasste Sicherheitselement des Sicherheitsdokuments tatsächlich optisch variabel ist, oder ob es sich um eine statische Kopie eines OVD (OVD: optical variable device) handelt.

Vorzugweise wird beim Überprüfen der ein oder mehreren ersten Informationen auf Echtheit zunächst überprüft, ob ein oder mehrere Objekte vorliegen.

Es ist dabei zweckmäßig, wenn zum Überprüfen, ob ein oder mehrere Objekte vorliegen, ein Bilderkennungsalgorithmus, insbesondere ein Haar-Cascade-Algorithmus, verwendet wird. Solche Algorithmen erlauben eine schnelle und zuverlässige Klassifizierung von Bildinhalten.

Der Haar-Cascade-Algorithmus beruht auf der Auswertung einer Vielzahl sogenannter "Haar-like" Merkmale in einem Einzelbild. Hierbei handelt es sich um Strukturen, die mit Haar-Wavelets, also Rechteckwellenzüge einer vorgegebenen Wellenlänge, verwandt sind. In zwei Dimensionen handelt es sich dabei einfach um benachbarte, alternierend helle und dunkle Rechteckbereiche im Bild. Durch Verschieben einer Rechteckmaske über das Einzelbild werden die vorliegenden "Haar-like" Merkmale ermittelt. Die vorliegenden "Haar-like" Merkmale werden dann mit denjenigen verglichen, die im zu erkennenden Objekt vorliegen sollen. Dies kann durch eine Filterkaskade erfolgen.

Der Haar-Cascade-Algorithmus hat den Vorteil, besonders wenig Rechenzeit und Computerresourcen zu benötigen. Es ist jedoch auch möglich, andere Bilderkennungsalgorithmen zu verwenden.

Die Bilderkennung beruht in vorteilhafter Weise auf einer Form des Computerlernens. Beispielsweise kann zum Überprüfen, ob ein oder mehrere Objekte vorliegen, mittels des Bilderkennungsalgorithmus ein Vergleich des Einzelbilds mit einem vorher aufgenommenen Trainingsdatensatz durchgeführt werden. Dem Algorithmus werden keine konkreten Parameter vorgegeben, anhand welcher eine Klassifizierung des Bildinhalts erfolgt, vielmehr lernt der Algorithmus diese Parameter anhand des Trainingsdatensatzes.

Bevorzugt werden dabei zum Aufnehmen des Trainingsdatensatzes eine Mehrzahl von Bildern erstellt, wobei eine erste Teilmenge der Bilder jeweils das zu erkennende Objekt aufweist und eine zweite Teilmenge der Bilder jeweils das zu erkennende Objekt nicht aufweist, und wobei jedem Bild der ersten Teilmenge alle jeweiligen Bildkoordinaten der zu erkennenden Merkmale des zu erkennenden Objekts zugeordnet werden.

Anhand der ersten und zweiten Teilmenge sowie der zugeordneten Bildkoordinaten wird dann bevorzugt ein Training des Bilderkennungsalgorithmus durchgeführt. Hierdurch lernt der Algorithmus, die Bilder korrekt zu klassifizieren und gegebenenfalls bewusst in den Trainingsdatensatz eingebrachte Störfaktoren, wie beispielsweise Reflexionen in den Bildern, zufälligen Schattenfall oder dergleichen zu ignorieren. Hierdurch wird eine schnelle und zuverlässige Bilderkennung ermöglicht.

Vorzugweise werden beim Überprüfen der ein oder mehreren ersten Informationen auf Echtheit ein oder mehrere Merkmale zumindest eines Objekts der ein oder mehreren Objekte bestimmt, insbesondere mittels eines Bildverarbeitungsalgorithmus bestimmt.

Weiter ist es vorteilhaft, wenn zumindest ein Merkmal der einen oder mehreren Merkmale die Konturen des zumindest einen Objekts der ein oder mehreren Objekte sind und der Bildverarbeitungsalgorithmus ein Kantenerkennungsalgorithmus ist.

Gegenüber der oben beschriebenen Erkennung des Vorliegens von ein oder mehreren Objekten, werden so zusätzliche Informationen bereitgestellt. Insbesondere kann anhand der ermittelten Kontur das Vorliegen oder Nichtvorliegen von detaillierten Merkmalen des zumindest einen Objekts der ein oder mehreren Objekte überprüft werden. Dies liefert weitere Merkmale, die zur Prüfung des Sicherheitsdokuments beitragen können.

Vorzugsweise wird zum Ermitteln der Kontur ein Kantenerkennungsalgorithmus, insbesondere ein Canny-Algorithmus, ausgeführt. Der Canny-Algorithmus ist ein besonders robuster Algorithmus zur Kantendetektion und liefert schnelle und zuverlässige Ergebnisse.

Zur Anwendung des Canny-Algorithmus auf Farbbilder müssen diese zunächst in Graustufen überführt werden. In Graustufenbildern zeichnen sich Kanten durch starke Helligkeitsschwankungen, d. h. einen starken Kontrast, zwischen benachbarten Pixeln aus und können somit als Unstetigkeiten der Grauwertfunktion des Bildes beschrieben werden.

Da solche Unstetigkeiten auch durch Bildrauschen verursacht werden können, ist es zweckmäßig, wenn bei der Ausführung des Kantenerkennungsalgorithmus eine Rauschfilterung, insbesondere mittels eines Gaußfilters mit einer bevorzugten Kernel-Größe von 3 bis 7, durchgeführt wird.

Unter Kernel wird hierbei eine Konvolutionsmatrix verstanden, die auf die Bildinformation angewendet wird. Die Konvolutionsmatrix des Gaußfilters entspricht der Normalverteilung und wirkt als Tiefpassfilter. Der Grauwert eines gefilterten Pixels entspricht also dem mit der Normalverteilung gewichteten Mittelwert der Grauwerte der umgebenden Pixel bis zu einer maximalen, von der Kernelgröße definierten Entfernung. Kleinere, durch Rauschen entstehende Strukturen gehen verloren, während die Hauptstrukturen des abgebildeten Objekts erhalten bleiben. Vorzugsweise wird bei der Ausführung des Kantenerkennungsalgorithmus eine Kantendetektion durch die Anwendung eines Sobel-Operators in zumindest einer Vorzugsrichtung des Einzelbilds, vorzugsweise in zwei orthogonalen Vorzugsrichtungen des Einzelbilds, durchgeführt.

Der Sobel-Operator ist ebenfalls ein Faltungsoperator, der als diskreter Differenzierer wirkt. Durch die Faltung des Bildes mit dem Sobel-Operators erhält man die partiellen Ableitungen der Grauwertfunktion in den zwei orthogonalen Vorzugsrichtungen. Hieraus kann dann die Kantenrichtung und Kantenstärke bestimmt werden.

Es ist weiter bevorzugt, wenn bei der Ausführung des Kantenerkennungsalgorithmus eine Kantenfilterung durchgeführt wird. Dies kann beispielsweise mittels einer sogenannten "non-maximum suppression" erfolgen, die sicherstellt, dass nur die Maxima entlang einer Kante erhalten bleiben, so dass eine Kante senkrecht zu ihrer Erstreckungsrichtung nicht breiter als ein Pixel ist.

Vorzugsweise wird ferner bei der Ausführung des Kantenerkennungsalgorithmus eine schwellenwertbasierte Ermittelung der Bildkoordinaten der Kontur des Objekts durchgeführt. Es wird also ermittelt, ab welcher Kantenstärke ein Pixel zu einer Kante zu zählen ist.

Hierzu kann beispielsweise ein Hysterese-basiertes Verfahren angewendet werden. Man legt hierzu zwei Schwellenwerte T₁ und T₂ fest, wobei T₂ größer ist als T₁. Ein Pixel mit einer Kantenstärke größer T₂ wird als Bestandteil einer Kante betrachtet. Alle mit diesem Pixel verbundenen Pixel mit einer Kantenstärke größer als T₁ werden ebenfalls dieser Kante zugerechnet.

Man erhält somit die Bildkoordinaten aller einer Kante des Objekts zugehörigen Pixel in dem untersuchten Einzelbild. Diese können weiter analysiert werden, beispielsweise um einfache geometrische Formen zu erkennen.

Gemäß einem weiteren bevorzugten Ausführungsbeispiel der Erfindung wird beim Überprüfen der ein oder mehreren ersten Informationen durch Abgleich mit der Datenbank ein oder mehrere Zusatzinformation aus der Datenbank als zumindest ein Ergebnis der Prüfung ermittelt. Unter Zusatzinformationen werden hier Informationen verstanden, welche nicht auf dem Sicherheitsdokument enthalten sind, sondern aus der Datenbank an das AR-System übermittelt werden. Hierdurch werden dem Anwender weitere Informationen, welche zur Durchführung des Prüfprozesses nützlich sein können, bereitgestellt. Beispielsweise betrifft dies Meldungen bezüglich gesuchter Personen oder weitere Merkmale mit Bezug zum Dokumentenhalter.

Vorzugweise umfassen die ein oder mehreren Zusatzinformationen Informationen über zeitliche Bezüge zu bereits geprüften Sicherheitsdokumenten, Hinweise auf allgemeine Gegebenheiten/Vorkommnisse, Informationen zu Ereignissen vor Ort oder mit Orts-/Personenbezug, Querverweise auf weitere Prüfungen/Sichtungen des Sicherheitsdokuments, Hinweise auf das Beziehungsfeld des Dokumentenhalters, Hinweise auf weitere Sicherheitsmerkmale des Sicherheitsdokuments, Hinweise zur manuellen Überprüfung der Sicherheitsmerkmale und Statistiken. So ist es beispielsweise möglich, dass in der Datenbank auch weitere erfasste Informationen hinsichtlich besonderer Merkmale/Auffälligkeiten des Dokumentenhalters hinterlegt sind, welche zum Beispiel über fehlende Gliedmaßen Aufschluss geben. Ebenfalls ist es möglich, dass in der Datenbank auch situative Informationen zum Dokumentenhalter im Rahmen früherer Prüfungen/Sichtungen hinterlegt sind, welche beispielsweise darüber informieren, dass der Dokumentenhalter das Kopfhaar abweichend zum Foto auf dem Sicherheitsdokument und/oder dem hinterlegten Bild in der Datenbank mit Bezug auf einen Stichtag/Erfassung kurz trägt, wodurch es unter Berücksichtigung der Plausibilität somit nicht möglich sein kann, dass der Dokumentenhalter nach kurzem Zeitabstand bereits wieder langes Kopfhaar trägt.

Weiter ist es möglich, dass die ein oder mehreren Zusatzinformationen Informationen über Personengruppen, so genannte "Cluster" umfassen. So können beispielsweise Familienmitglieder oder Reisegruppen einer Personengruppe zugeordnet werden und so nacheinander erfasst bzw. überprüft werden. Dies erleichtert bzw. beschleunigt den Prüfprozess. So es beispielsweise möglich, dass bei der Kontrolle von Passagieren, welche aus einem Flugzeug kommen und in deren Personengruppe eine verdächtige Person festgestellt wird, weitere Personen der selben Personengruppe, welche ein oder mehrere übereinstimmende Merkmale aufweisen, einer umfassenden Kontrolle unterzogen werden. Hierdurch können Risikogruppen umfassender überprüft werden, wodurch die Sicherheit erhöht wird. Auch kann eine Änderung beispielsweise der Anzahl der Personen des Clusters festgestellt werden. So ist es beispielsweise möglich, dass ein Cluster von 5 Personen in einen Staat einreist, jedoch lediglich 4 Personen wieder ausreisen. Eine derartige Zusatzinformation kann dazu verwendet werden, eine umfassendere Kontrolle der Personen des Clusters durchzuführen, bzw. bei hinreichendem Verdacht die fehlende Person zu suchen. Bezüglich der Bildung von Clustern anhand ein oder mehrerer der erfassten Informationen wird auf weitere Ausführungen verwiesen.

Vorzugsweise umfassen die ein oder mehreren Ergebnisse Ergebnisse über personenbezogene Daten, insbesondere den Namen, das Geburtsdatum oder das Geschlecht des Dokumentenhalters, Ausstellungsort des Sicherheitsdokuments und Status des Sicherheitsdokuments, insbesondere Gültigkeit des Sicherheitsdoku ments.

Weiter ist es vorteilhaft, dass bei dem Schritt der Überprüfung der ein oder mehreren ersten Informationen durch Abgleich mit einer Datenbank der Dokumententyp als zumindest ein Ergebnis bestimmt wird. Durch ein derartiges Verfahren kann die Zuweisung des Sicherheitsdokuments zu einem bestimmten Dokumententyp erreicht werden. So kann dem Anwender beispielsweise direkt ausgegeben werden, aus welchem Staat das Sicherheitsdokument stammt. Kann der Dokumententyp nicht bestimmt werden, beispielsweise weil das Sicherheitsdokument nicht bekannt ist, kann dem Anwender beispielsweise ein Alarmsignal ausgegeben werden bzw. Details des Dokuments mittels des AR-Systems erfasst werden, welche in der Datenbank hinterlegt werden können.

Weiter ist es möglich, dass das Sicherheitsdokument, beispielsweise ein ID-Dokument wie ein Reisepass oder eine Identitätskarte, anhand des maschinenlesbaren Bereichs (OCR-B) identifiziert wird. Mittels des Abgleichs mit der Datenbank (beispielsweise Keesing Documentchecker, IDENTT®, o. ä.) werden dann Detailinformationen zum Sicherheitsdokument beispielsweise zu den einzelnen Merkmalen eines OVDs des Sicherheitsdokuments zur Verfügung gestellt (beispielsweise konkrete Bewegungseffekte / Transformationen / Verwandlungen beim Kippen um eine horizontale oder vertikale Achse, farbige oder achromatische Kontrastwechsel beim Drehen um 90° oder 180°, Farbwechsel beim Drehen um 90°, Bildwechsel mit zwei oder drei verschiedenen Motiven, das Vorhandensein von Nanoinformationen, Nanotexten, Mikrotexten, absichtlichen Mikrotext-Fehlern, etc.). Mittels dieser zusätzlich zur Verfügung gestellten Informationen ist eine effektivere, genauere ("ganzheitliche"), d.h. sicherheitstechnisch wertvollere Dokumentenprüfung möglich. Im Gegensatz dazu ist eine visuelle Inspektion oftmals nicht ausreichend oder nur oberflächlich, weil der prüfenden Person nicht bekannt ist, welches konkrete Sicherheitselement mit welchen optischen und anderen Sicherheitsfunktionen überhaupt dem jeweiligen Sicherheitsdokument zugeordnet ist. Aufgrund der Vielzahl existierender Sicherheitselemente auf allen möglichen unterschiedlichen Sicherheitsdokumenten ist es oftmals schwierig, jeweils genaue Kenntnis über das konkret vorliegende Sicherheitselement und dessen spezifische Eigenschaften aus der Erinnerung abzurufen, insbesondere angesichts der kurzen Zeit von durchschnittlich ca. 15 bis 20 Sekunden, die zur Prüfung zur Verfügung stehen.

Gemäß einem weiteren bevorzugten Ausführungsbeispiel der Erfindung umfasst das Verfahren des Weiteren den Schritt des Erfassens von ein oder mehreren dritten Informationen des räumlichen Umfelds.

Vorzugsweise sind die ein oder mehreren dritten Informationen visuelle, akustische, thermische oder chemische Informationen des räumlichen Umfelds. Gegenüber der oben beschriebenen Erfassung von ein oder mehreren ersten und/oder zweiten Informationen, werden so zusätzliche Informationen des räumlichen Umfelds bereitgestellt. Insbesondere kann anhand der ein oder mehreren dritten Informationen des räumlichen Umfelds die Anzahl der Merkmale, die zur Prüfung des Sicherheitsdokuments beitragen, weiter erhöht werden. So kann beispielsweise das Kfz-Kennzeichen des Fahrzeugs des Dokumentenhalters im Rahmen einer Plausibilitätskontrolle mit erfasst werden.

Weiter ist es vorteilhaft, wenn die ein oder mehreren dritten Informationen mittels ein oder mehrerer Mikrophone, Feuchtigkeitssensoren, Photodetektoren oder Temperatursensoren erfasst werden. So können die mittels dieser Sensoren bzw. Detektoren erfassten ein oder mehreren dritten Informationen in digitaler und analoger Signalform vorliegen. Beispielsweise können analoge Signale mittels eines AD-Wandlers bzw. DA-Wandlers in digitale Signale überführt werden und umgekehrt. Diese können beispielsweise mittels Signalverarbeitungsmethoden weiter verarbeitet werden.

Weiter ist es möglich, dass ein oder mehrere der Erfassungseinrichtungen des AR-Systems ein oder mehrere Mikrophone, Feuchtigkeitssensoren, Photodetektoren, oder Temperatursensoren sind.

Weiter ist es auch möglich, dass ein Vergleich, insbesondere auf Plausibilität, ein oder mehrerer der ersten Informationen und/oder ein oder mehrerer der zweiten Informationen mit ein oder mehreren der dritten Informationen durch Abgleich mit der Datenbank erfolgt. Dies ermöglicht eine Verbesserung der Prüfung des Sicherheitsdokuments, da wie oben bereits beschrieben die Anzahl der Merkmale, die zur Prüfung des Sicherheitsdokuments beitragen, weiter erhöht wird. Bei dem Abgleich der ein oder mehreren dritten Informationen mit der Datenbank muss nicht zwingend eine absolute Übereinstimmung vorliegen, es ist auch möglich, Toleranzbereiche für erlaubte Abweichungen vorzugeben. Abweichungen bezüglich ein oder mehrerer dritter Informationen können neben den oben bereits für die visuellen Informationen beschrieben auch beispielsweise Störgeräusche, wie Verkehrslärm, für beispielsweise die akustischen Informationen darstellen. Solche Störquellen können beispielsweise mittels geeigneter Filtermethoden aus der Signalverarbeitung verringert werden.

Weiter ist es möglich, anhand der ein oder mehreren dritten Informationen eine oder mehrere Personengruppen, so genannte "Cluster" wie oben beschrieben zu bilden. So es beispielsweise möglich, Personen eines Kfz-Fahrzeugs oder eines Flugzeugs einer Personengruppe zuzuordnen. Somit es ist möglich, dass ein Cluster von Personen, anhand der ein oder mehreren Zusatzinformationen aus der Datenbank, wie oben beschrieben, gebildet wird oder durch ein oder mehrere dritte Informationen des räumlichen Umfelds gebildet wird. Die entsprechenden Daten der anhand der ein oder mehreren dritten Informationen gebildeten Personengruppen können beispielsweise in der Datenbank gespeichert werden. So ist es beispielsweise möglich, ein oder mehrere der zweiten Informationen mit den Informationen eines Clusters, welches anhand ein oder mehrerer der dritten Informationen gebildet wurde, abzugleichen, um die ein oder mehrere der zweiten Informationen besser zu interpretieren.

Vorteilhafterweise wirkt das Verfahren bzw. das AR-Sytsem unterstützend bei der Prüfung des Sicherheitsdokuments. So ist es beispielsweise im Rahmen von Personenkontrollen möglich, dass Fragen für einen Dialog zwischen dem Nutzer und dem Dokumentenhalter vorgeschlagen werden. Eine solche Befragung kann z. B. ein oder mehrere zweite Informationen des Dokumentenhalters erfassen. So ist es möglich, dass dem Nutzer beispielsweise eine Landes- oder Regionen-Karte eingeblendet wird, welche dem Ursprungsland und/oder dem Geburtsort des Dokumentenhalters entspricht. Dies ermöglicht dem Nutzer beispielsweise das Stellen von so genannten Fangfragen, welche logische Widersprüche zwischen der Antwort des Dokumentenhalters und den Informationen, über die das Verfahren oder das AR-System verfügt, aufdecken können. So kann beispielsweise eine Zeitangabe einer zu überprüfenden Person bezüglich einer Reisedauer geprüft werden, indem zum einen die Frage bezüglich der Reisedauer vorgeschlagen wird und zum anderen die Antwort von dem AR-System bestimmt wird. Beispielsweise dauert eine Zugfahrt laut Fahrplan ca. 1 h, die zu überprüfende Person gibt jedoch an, mehr als 2 h mit dem Zug benötigt zu haben. Die Zeitangabe aus dem Fahrplan kann beispielsweise aus der Datenbank abgerufen werden. Hierdurch wird es ermöglicht, Widersprüche in den Aussagen einer zu überprüfenden Person aufzudecken und somit die Überprüfung weiter zu verbessern. Entsprechende Informationen aus Dialogen werden auch heute schon als Mittel zur Eruierung der Stimmigkeit von Informationen beispielsweise im Rahmen einer Personenkontrolle genutzt. Die vorliegende Erfindung ermöglicht eine weitreichendere, interaktivere und komplexere Nutzung von Dialogen zur Überprüfung eines Sicherheitsdokuments. Hierbei ist es möglich, dass das AR-System dem Nutzer Vorgaben ausgibt, bevorzugt in Form von Guidelines in akustischer Form, insbesondere mittels Ohrhörer (für Dokumentenhalter nicht hörbar), ausgibt. Die Guidelines können jedoch auch in visueller und/oder fühlbarer Form ausgegeben werden.

Gemäß einem weiteren bevorzugten Ausführungsbeispiel der Erfindung umfasst das Verfahren des Weiteren den Schritt des Erfassens von ein oder mehreren vierten Informationen, insbesondere Positions- und/oder Lagebestimmung des AR-Systems im Raum.

Vorzugsweise werden die ein oder mehreren vierten Informationen durch ein globales Positionsbestimmungssystem, insbesondere GPS, Galileo, GLONASS oder BeiDou, über ortsspezifische Kommunikationsnetze wie WLAN oder andere Sendestationen (zur Positionsbestimmung) und/oder durch zumindest einen Beschleunigungssensor und/oder Orientierungssensor bestimmt. Durch eine derartige Ausgestaltung werden so zusätzliche Informationen bezüglich der Positions- und/oder Lagebestimmung des AR-Systems im Raum bereitgestellt. Beispielsweise kann eine oder mehrere vierte Informationen bezüglich der Positionsbestimmung für ortsbezogene Bezüge zu einer bereits erfolgten vorherigen Prüfung des Sicherheitsdokuments herangezogen werden bzw. Querverweise auf Orte anderer Prüfungen durch weitere Anwender hergestellt werden. Des Weiteren wird es hier beispielsweise möglich, dass eine Kamera des AR-Systems erkennt, wie das Sicherheitsdokument und somit das optische Sicherheitsmerkmal gehalten und bewegt wird. Vorteilhafterweise wird zusätzlich auch noch das Vorhandensein, die Position, die Beleuchtungsstärke von ggf. vorkommenden Lichtquellen mit entsprechenden Sensoren, wie beispielsweise richtungsabhängigen Lichtsensoren, gemessen. In Kenntnis dieser Bewegungen und der Details der Sicherheitsmerkmale, kann dem Nutzer eine realistische Animation des zu verifizierenden Sicherheitsmerkmals eingeblendet werden. Dies erleichtert (angesichts der großen Zahl verschiedener Sicherheitsdokumente mit optischen Sicherheitsmerkmalen) den Verifizierungsprozess erheblich und erhöht die Wahrscheinlichkeit, Fälschungen schnell und eindeutig zu erkennen. Im Vergleich zu einer Prüfung aus dem Gedächtnis können hiermit kleinere Unterschiede zwischen Original und Fälschung erkannt werden. Hierdurch erhöht sich somit der praktische Fälschungssicherheitswert der optischen Sicherheitsmerkmale.

Vorzugsweise ist zumindest eine der Erfassungseinrichtungen des AR-Systems ein Positionsbestimmungssystem, insbesondere GPS, Galileo, GLONASS oder BeiDou System, und/oder ein Beschleunigungssensor und/oder ein Orientierungssensor.

Weiterhin ist es vorteilhaft, bei dem Schritt der Überprüfung der ein oder mehreren erfassten ersten, zweiten, dritten oder vierten Informationen Algorithmen zu verwenden, welche wie oben beschrieben in vorteilhafter Weise auf einer Form des Computerlernens beruhen. So kann beispielsweise ein Bilderkennungsalgorithmus z. B. die Merkmale eines Dokumententyps (beispielsweise typische Passport-Layouts) anhand eines Trainingsdatensatzes erlernen. Auf Basis dieser erlernten Merkmale kann die obige Überprüfung schneller und/oder genauer erfolgen. Dies kann beispielsweise zur schnellen Überprüfung der ein oder mehreren ersten, zweiten, dritten oder vierten Informationen genutzt werden. So ist es möglich, dass bei der Prüfung eines Sicherheitsdokuments in einem ersten Schritt ein oder mehrere der ersten, zweiten, dritten oder vierten Informationen geprüft werden, beispielsweise mittels eines auf einer Form des Computerlernens beruhenden Algorithmus geprüft werden, und in einem zweiten Schritt, ggf. in Abhängigkeit des Ergebnisses des ersten Schritts, eine oder mehrere der ein oder mehreren ersten, zweiten, dritten oder vierten Informationen beispielsweise zusätzlich manuell überprüft werden.

Weiter ist es vorteilhaft, wenn ein oder mehrere der ein oder mehreren erfassten ersten, zweiten, dritten oder vierten Informationen nicht in der Datenbank vorliegen, diese erfassten Informationen in der Datenbank zu speichern und zu weiteren Prüfungen heranzuziehen bzw. diese mit weiteren Informationen untereinander auf Plausibilität zu prüfen.

Weiter ist es vorteilhaft, dass die ein oder mehreren ersten Informationen und/oder zweiten Informationen mittels eines oder mehrerer optischer Bilderfassungsgeräte, insbesondere einer Kamera, optisch erfasst werden. Die ein oder mehreren optischen Bilderfassungsgeräte sind in der Regel Kameras, beispielsweise CCD-Kameras (CCD: charged coupled device). Bevorzugt werden dabei CCD-Arrays eingesetzt, also CCD-Anordnungen, bei denen einzelne CCDs in einer zweidimensionalen Matrix angeordnet sind. Die von einer solchen Kamera erzeugten Bilder liegen dann in Form einer Pixelmatrix vor, wobei jedes Pixel mit einem einzelnen CCD der Kamera korrespondiert. Bevorzugt weist die CCD-Kamera jeweils separate CCDs für die Farben Rot, Grün und Blau (RGB) auf, wodurch diese Einzelfarben oder Mischfarben daraus besonders einfach zu detektieren sind. Alternativ oder ergänzend dazu können selbstverständlich weitere Bildererfassungsgeräte, wie beispielsweise CMOS-Kameras (CMOS: Complementary metal-oxide-semiconductor), Laserscanner, TOF-Kameras (TOF: Time of flight) verwendet werden. Vorzugsweise werden Einzelbilder mit einer Auflösung von 2 bis 20 Megapixel, bevorzugt 5 bis 10 Megapixel, erfasst. Weiter ist es vorteilhaft, eine Bildfolge mit einer Vielzahl von Einzelbildern aufzunehmen. Die Bildfolge kann dabei eine Mehrzahl von diskret erfassten Einzelbildern sein, die in keinem zeitlichen Zusammenhang stehen, es kann sich aber auch um einen Film handeln, also aus Einzelbildern bestehen, die in einem vorgegebenen zeitlichen Abstand, bevorzugt mit einer Aufnahmefrequenz von 5 bis 500 Bildern pro Sekunde, weiter bevorzugt mit einer Aufnahmefrequenz von 5 bis 60 Bildern pro Sekunde, aufgenommen sind. Vorzugsweise werden Bildfolgen mit 480 x 320 Pixel, bevorzugt 1920 x 1280 Pixel, weiter bevorzugt 1920 x 1080 Pixeln, erfasst. Die Aufnahme von Bilderfolgen ist besonders vorteilhaft zur Erfassung von optisch variablen Sicherheitselementen (OVD: optical variable devices). Bei OVDs handelt es sich um Elemente, die bei unterschiedlichen Betrachtungs- oder Beleuchtungsbedingungen unterschiedliche optische Effekte zeigen.

Weiter ist es vorteilhaft, wenn zumindest eine Bilderfassungseinrichtung des AR-Systems eine Kamera, insbesondere CCD Kamera oder CMOS Kamera, ist.

Die vorgenannten Bildererfassungsgeräte können dabei in dem Spektralbereich arbeiten, welcher für das menschliche Auge direkt wahrnehmbar ist, oder auch außerhalb dieses Spektralbereichs, beispielsweise im IR- oder UV-Spektrum arbeiten. Die ein oder mehreren erfassten ersten Informationen und/oder zweiten Informationen können somit in dem für das menschliche Auge direkt wahrnehmbaren Spektralbereich erfasst sein. Ebenso ist es möglich, dass die optische Empfindlichkeit der Bildererfassungsgeräte besonders erhöht ist, um z. B. bei besonders dunklen Umgebungslichtverhältnissen zu arbeiten. Auch ist es möglich, dass die ein oder mehreren ersten Informationen und/oder zweiten Informationen beispielsweise mittels eines Bildwandlers und/oder Restlichtverstärkers erfasst werden.

Weiter ist es vorteilhaft, dass das AR-System als eine Datenbrille ausgeformt ist. Durch eine derartige Ausgestaltung ist eine besonders benutzerfreundliche und flexible Durchführung des erfindungsgemäßen Verfahrens möglich.

Bevorzugt wird vordem Erfassen von ein oder mehreren ersten Informationen des Sicherheitsdokuments mittels des AR-Systems, insbesondere einer Datenbrille, die Beleuchtungsstärke gemessen und bei einer Beleuchtungsstärke von weniger als 800 Ix wird eine Lichtquelle des AR-Systems aktiviert. Dies kann automatisch vom AR-System oder manuell durch die Anwender erfolgen. Hierdurch wird sichergestellt, dass das Sicherheitsdokument hinreichend ausgeleuchtet ist, um eine zuverlässige Prüfung zu ermöglichen. Eine Beleuchtungsstärke von 800 Ix entspricht dabei in etwa einem normal ausgeleuchteten Büroraum. Weiter ist es möglich, dass für spezifische Sicherheitsdokumente Referenzwerte beispielsweise in der Datenbank hinterlegt sind und die Anpassung der Beleuchtungsstärke nach Erkennung des Sicherheitsdokuments automatisch erfolgt.

Weiter ist es vorteilhaft, wenn der Abgleich mit der Datenbank über eine Internetverbindung, insbesondere drahtlose Internetverbindung, erfolgt. Durch eine derartige Ausgestaltung wird die Flexibilität des erfindungsgemäßen Verfahrens erhöht. Bevorzugt wird der Abgleich mit der Datenbank über eine gesicherte Internetverbindung durchgeführt. So können die übertragenen Daten beispielsweise in verschlüsselter Form übertragen werden. Die Verschlüsselung wird bevorzugt durch einen Verschlüsselungsalgorithmus durchgeführt.

Vorzugsweise weist die Steuervorrichtung des AR-Systems eine Kommunikationsschnittstelle zum Zugriff, insbesondere drahtlosen Zugriff, auf die Datenbank auf.

Gemäß einem weiteren bevorzugten Ausführungsbeispiel der Erfindung sind die Datenbank und/oder Teile der Datenbank auf der Steuervorrichtung des AR-Systems hinterlegt, insbesondere auf einem Speichermedium der Steuervorrichtung des AR-Systems abgespeichert. Dies ermöglicht einen ortsunabhängigen Einsatz der erfindungsgemäßen Verwendung des AR-Systems, beispielsweise im Rahmen von Personenkontrollen. Des Weiteren ist es auch wie oben beschrieben möglich, dass der Abgleich mit der Datenbank über eine drahtlose Kommunikation, beispielsweise über eine drahtlose Internetverbindung, erfolgt, um einen ortsunabhängigen Einsatz der erfindungsgemäßen Verwendung des AR-Systems zu ermöglichen.

Im Folgenden werden Ausführungsbeispiele der Erfindung exemplarisch unter Zuhilfenahme der beiliegenden Figuren erläutert.
- Fig. 1: zeigt eine schematische Darstellung zur Verdeutlichung eines Verfahrens zur Prüfung eines Sicherheitsdokuments mittels eines AR-Systems.
- Fig. 2: zeigt eine schematische Darstellung eines Systems zum Durchführen des Verfahrens nach Fig. 1.
- Fig. 3: zeigt ein Flussdiagramm eines Prüfprozesses.
- Fig. 4 bis Fig. 7: zeigen Diagramme, welche einen Prüfprozess spezifizieren.

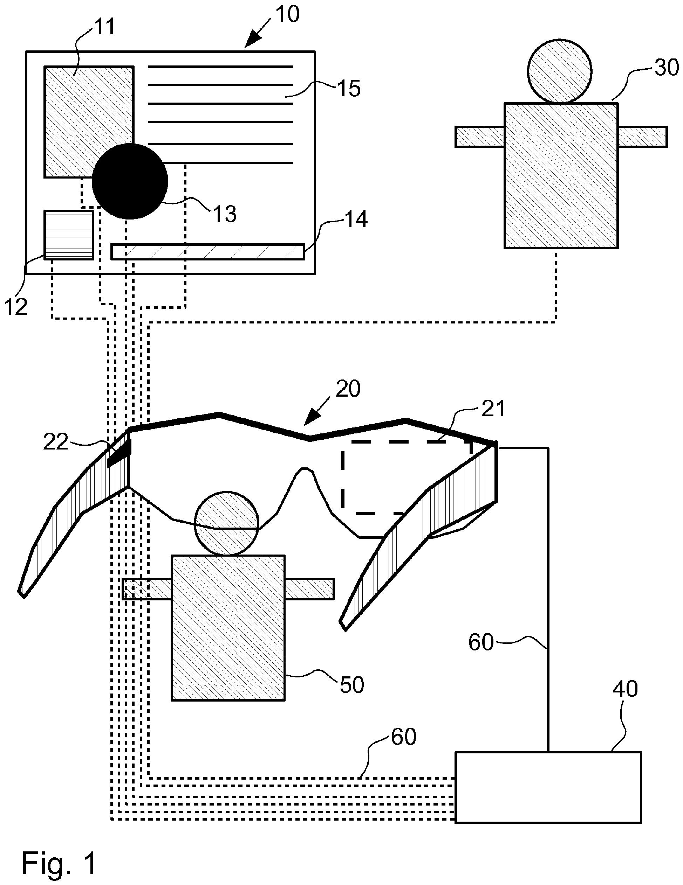

Fig. 1 zeigt eine schematische Darstellung eines Prüfprozesses eines Sicherheitsdokuments 10 mittels eines Augmented-Reality-Systems 20.

Im Folgenden soll die Abkürzung AR-System 20 für Augmented-Reality-System 20 stehen und verwendet werden.

Das Sicherheitsdokument 10 kann beispielsweise ein Reisepass, ein Visum, ein Geburts-Zertifikat, eine Banknote, ein Ausweisdokument, ein Wertpapier, eine Kreditkarte, ein Ticket oder ein Voucher sein. So ist es möglich, dass das Sicherheitsdokument 10 aus dem öffentlichen, staatlichen und privaten Sektor stammt.

Das Sicherheitsdokument 10, beispielsweise ein Personalausweis, umfasst vorzugsweise ein Foto 11, ein Speichermedium 12, ein Sicherheitselement 13, kodierte Kennungen 14, insbesondere einen maschinenlesbaren Bereich, und einen Bereich 15 mit personenbezogenen Daten, wie beispielsweise Name, Adresse und Geburtsdatum des Dokumentenhalters 30.

Der Bereich der kodierten Kennungen 14 weist beispielsweise die OCR-B Schrift auf, welche beispielsweise die Ausweisnummer kodiert.

Das Sicherheitselement 13 ist bevorzugt ein optisch variables Sicherheitselement und kann beispielsweise eine Reliefstruktur, insbesondere eine diffraktive Struktur, lineare oder gekreuzte Sinusgitterstrukturen oder Binärgitterstrukturen, asymmetrische Blaze-Gitterstrukturen, eine Überlagerung einer Makrostruktur mit einer diffraktiven und/oder Matt-Mikrostruktur, Beugungsstrukturen Nullter Ordnung, Blazegitter, Makrostrukturen, insbesondere Linsenstrukturen oder Mikroprismenstrukturen, Spiegelflächen, Mattstrukturen, insbesondere anisotrope und isotrope Mattstrukturen, Dünnfilmschichtelemente oder Flüssigkristallschichten zur Erzeugung von blickwinkelabhängigen Farbverschiebungseffekten, Volumenhologramme oder Schichten/Indica umfassende optisch variable Pigmente und/oder lumineszente, photochrome, elektrochrome oder thermochrome Stoffe umfassen. Auch sind Kombinationen der genannten Strukturen sowie weitere Sicherheitselemente 13 möglich. Insbesondere durch Kombinationen von ein oder mehreren der vorgenannten Sicherheitselemente kann ein besonders fälschungssicheres OVD (OVD: optical variable device) bereitgestellt werden, weil ein Fälscher diese spezifische Kombination nachstellen muss, was den technischen Schwierigkeitsgrad der Fälschung beträchtlich erhöht. Bei OVDs handelt es sich um Elemente, die bei unterschiedlichen Betrachtungs- oder Beleuchtungsbedingungen unterschiedliche optische Effekte zeigen.

Auch kann je nach Dokumententyp das Sicherheitsdokument 10 andere oder weitere Informationen oder Merkmale aufweisen. Beispielsweise kann das Sicherheitsdokument 10 Symbole, Logos, Bilder, Zeichen, alphanummerische Charaktere oder Zahlen umfassen.

Unter AR-System soll dabei jegliches Gerät verstanden werden, welches die Realitätswahrnehmung eines Anwenders mittels technischer Hilfsmittel erweitert. Neben der bereits erwähnten Datenbrille, einem Tablet, einem Smartphone oder einem PDA (PDA = Personal Digital Assistant) können selbstverständlich auch andere Geräte verwendet werden. Beispielsweise ist es auch möglich, anstelle der genannten Vielzweckgeräte auch Geräte zu verwenden, die spezifisch nur für die Durchführung dieses Verfahrens konstruiert sind. Beispielsweise kann eine vorhandene Datenbrille durch Anpassung der Software und/oder Hardware an die Durchführung des erfindungsgemäßen Verfahrens angepasst werden.

Das AR-System 20 weist eine oder mehrere Erfassungseinrichtungen, insbesondere die Erfassungseinrichtung 22, eine Steuervorrichtung, insbesondere die Steuervorrichtung 24 , und vorzugsweise ein oder mehrere Ausgabevorrichtungen, insbesondere die Ausgabevorrichtung 21 auf.

Das AR-System 20, beispielsweise eine Datenbrille, umfasst so beispielsweise die Ausgabevorrichtung 21, beispielsweise einen Infoscreen. Der Infoscreen stellt hierbei visuelle Einblendungen beispielsweise mittels eines Wellenleiters und eines entsprechend ausgeformten Reflektors dem menschlichen Auge dar.

Des Weiteren umfasst das AR-System 20 beispielsweise die Erfassungseinrichtung 22, wie beispielsweise eine Kamera, die Bilder mit einer Auflösung von 5 Megapixeln in einem Wellenlängenbereich von 380 nm bis 3 µm detektiert und damit sowohl den für das menschliche Auge sichtbaren Spektralbereich als auch den nahen Infrarotbereich mit erfasst. Durch eine derartige Ausgestaltung ist es möglich, für den menschlichen Betrachter visuell nicht erkennbare Informationen aus dem nahen Infrarotbereich zu erfassen. Die Kamera ist des Weiteren derart ausgestaltet, dass diese auch Bildfolgen mit einer Aufnahmefrequenz von 100 Hz und 1920 x 1080 Pixeln aufnehmen kann. Des Weiteren umfasst die Erfassungseinrichtung 22 vorzugsweise eine Vorrichtung zum Auslesen des Speichermediums 12, wie beispielsweise ein RFID-Lesegerät. Das RFID-Lesegerät ermöglicht ein berührungsloses Auslesen des Speichermediums 12.

Der Anwender 50, beispielsweise ein Polizeibeamter oder ein Zollbeamter, erfasst mittels der Erfassungseinrichtung 22 des AR-Systems 20 nun das Sicherheitsdokument 10 und den Dokumentenhalter 30 durch eine Bildaufnahme des Sicherheitsdokuments 10 und des Dokumentenhalters 30. Unter Erfassen wird hierbei das Detektieren der ein oder mehreren Information mittels der Erfassungseinrichtung 22 verstanden. Die Bildaufnahme kann beispielsweise durch einen berührungsempfindlichen Sensor des AR-Systems 20, wie beispielsweise eines Touchscreens, ausgelöst werden.

Des Weiteren wird das Speichermedium 12 des Sicherheitsdokuments 10 ausgelesen. Das Auslesen des Speichermediums 12 kann ebenfalls durch einen berührungsempfindlichen Sensor ausgelöst werden.

Die einzelnen Informationen bzw. Merkmale, wie das Foto 11, das Sicherheitselement 13, die kodierte Kennung 14 und der Bereich 15 mit den personenbezogenen Daten, können dabei in einem Gesamtbild erfasst oder auch sequentiell als die einzelnen Merkmale bzw. Informationen aufweisenden Einzelbilder erfasst werden.

Die erfassten Informationen in Form der Bilder des Sicherheitsdokuments 10, des Dokumentenhalters 30 und der Informationen des Speichermediums werden von der Steuervorrichtung des AR-Systems 20 über eine Kommunikationsverbindung 60 an eine Datenbank 40 übermittelt. Alternativ werden von der Steuervorrichtung des AR-Systems von der Datenbank 40 über die Kommunikationsverbindung 60 die diesen Informationen in der Datenbank 40 zugeordneten Informationen für den Abgleich angefordert.

Die Kommunikationsverbindung erfolgt beispielsweise über eine drahtlose Internetverbindung mittels UMTS, LTE oder GPRS. Es ist jedoch auch möglich, dass die Kommunikationsverbindung 60 drahtgebunden ist. Ebenfalls sind weitere Kommunikationsverbindungen wie beispielsweise über Satellit oder lokale Verbindungen wie beispielsweise Bluetooth oder WLAN möglich. Weiter ist es möglich, dass die Datenbank 40 oder ein Teil der Datenbank 40 lokal in dem AR-System enthalten ist.

Die Datenbank 40, beispielsweise ein Zentralrechner oder eine sogenannte Cloud aus einer Vielzahl von vernetzten, gemeinsam berechnenden Einzelrechnern, und/oder die Steuervorrichtung des AR-Systems 20, führt nun einen Abgleich der empfangenen Informationen mit auf der Datenbank 40 hinterlegten zugeordneten Informationen durch.

Dabei wird zunächst der Dokumententyp beispielsweise anhand der OCR-B Schrift in der kodierten Kennung 14 bestimmt.

Ist das Dokument bekannt, können die weiteren Informationen auf Echtheit überprüft werden. Dabei wird zunächst überprüft, ob die dem Dokumententyp zugeordneten Informationen bzw. Merkmale vorliegen. Diese Informationen bzw. Merkmale liegen typischerweise in Form von ein oder mehreren Objekten oder Motiven, wie beispielsweise dem Foto 11 oder dem Sicherheitselement 13, auf dem Sicherheitsdokument vor.

Es ist dabei zweckmäßig, wenn zum Überprüfen, ob ein oder mehrere Objekte vorliegen, ein Bilderkennungsalgorithmus, insbesondere ein Haar-Cascade-Algorithmus, verwendet wird. Solche Algorithmen erlauben eine schnelle und zuverlässige Klassifizierung von Bildinhalten.

Der Haar-Cascade-Algorithmus beruht auf der Auswertung einer Vielzahl sogenannter "Haar-like" Merkmale in einem Einzelbild. Hierbei handelt es sich um Strukturen, die mit Haar-Wavelets, also Rechteckwellenzüge einer vorgegebenen Wellenlänge, verwandt sind. In zwei Dimensionen handelt es sich dabei einfach um benachbarte, alternierend helle und dunkle Rechteckbereich im Bild. Durch Verschieben einer Rechteckmaske über das Einzelbild werden die vorliegenden "Haar-like" Merkmale ermittelt. Die vorliegenden "Haar-like" Merkmale werden dann mit denjenigen verglichen, die im zu erkennenden Objekt, wie beispielsweise dem Foto 11 oder dem Sicherheitselement 13, vorliegen sollen. Dies kann durch eine Filterkaskade erfolgen.

Der Haar-Cascade-Algorithmus hat den Vorteil, besonders wenig Rechenzeit und Computerresourcen zu benötigen. Es ist jedoch auch möglich, andere Bilderkennungsalgorithmen zu verwenden.

Zur Bilderkennung wird eine Form des Computerlernens verwendet. Dem Algorithmus werden keine konkreten Parameter vorgegeben, anhand welcher eine Klassifizierung des Bildinhalts erfolgt, vielmehr lernt der Algorithmus diese Parameter anhand des Trainingsdatensatzes.

Um den Trainingsdatensatz zu erstellen, wird eine Mehrzahl von Bildern aufgenommen, wobei eine erste Teilmenge der Bilder jeweils das zu erkennende Objekt, wie beispielsweise das Foto 11 oder das Sicherheitselement 13, aufweist und eine zweite Teilmenge der Bilder jeweils das das zu erkennende Objekt, wie beispielsweise das Foto 11 oder das Sicherheitselement 13, nicht aufweist, und wobei jedem Bild der ersten Teilmenge alle jeweiligen Bildkoordinaten der zu erkennenden Merkmale des zu erkennenden Objekts, wie beispielsweise dem Foto 11 oder dem Sicherheitselement 13, zugeordnet werden.

Anhand der ersten und zweiten Teilmenge sowie der zugeordneten Bildkoordinaten wird dann ein Training des Bilderkennungsalgorithmus durchgeführt. Hierdurch lernt der Algorithmus, die Bilder korrekt zu klassifizieren und gegebenenfalls bewusst in den Trainingsdatensatz eingebrachte Störfaktoren, wie beispielsweise Reflexionen in den Bildern, zufälligen Schattenfall oder dergleichen zu ignorieren.

Wenn das Vorliegen des zu erkennenden Objekts, wie beispielsweise des Fotos 11 oder des Sicherheitselements 13, bestätigt werden kann, wird anschließend aus zumindest einem Objekt, wie beispielsweise dem Foto 11 oder dem Sicherheitselement 13, die Kontur ermittelt. Gegenüber der oben beschriebenen einfachen Bilderkennung, die lediglich eine Ja/Nein-Klassifizierung oder eine Wahrscheinlichkeitsaussage liefert, ob das zu erkennende Objekt, wie beispielsweise das Foto 11 oder das Sicherheitselement 13, in dem Einzelbild vorhanden ist, werden so zusätzliche Informationen bereitgestellt. Insbesondere kann anhand der ermittelten Kontur das Vorliegen oder Nichtvorliegen von detaillierten Merkmalen des zu erkennenden Objekts, wie beispielsweise des Fotos 11 oder des Sicherheitselements 13, überprüft werden. Dies liefert weitere Merkmale, die zur Prüfung des Sicherheitsdokuments beitragen können.

Um die Kontur des zu erkennenden Objekts, wie beispielsweise des Fotos 11 oder des Sicherheitselements 13, zu bestimmen, kann ein Kantenerkennungsalgorithmus wie der Canny-Algorithmus verwendet werden.

Zur Anwendung des Canny-Algorithmus auf Farbbilder müssen diese zunächst in Graustufen überführt werden. In Graustufenbildern zeichnen sich Kanten durch starke Helligkeitsschwankungen zwischen benachbarten Pixeln aus und können somit als Unstetigkeiten der Grauwertfunktion des Bildes beschrieben werden.

Da solche Unstetigkeiten auch durch Bildrauschen verursacht werden können, ist es zweckmäßig, wenn bei der Ausführung des Kantenerkennungsalgorithmus eine Rauschfilterung, insbesondere mittels eines Gaußfilters mit einer bevorzugten Kernel-Größe von 3 bis 7, durchgeführt wird.

Unter Kernel wird hierbei eine Konvolutionsmatrix verstanden, die auf die Bildinformation angewendet wird. Die Konvolutionsmatrix des Gaußfilters entspricht der Normalverteilung und wirkt als Tiefpassfilter. Der Grauwert eines gefilterten Pixels entspricht also dem mit der Normalverteilung gewichteten Mittelwert der Grauwerte der umgebenden Pixel bis zu einer maximalen, von der Kernelgröße definierten Entfernung. Kleinere, durch Rauschen entstehende Strukturen gehen verloren, während die Hauptstrukturen des zu erkennenden Objekts, wie beispielsweise des Fotos 11 oder des Sicherheitselements 13, erhalten bleiben.

Vorzugsweise wird bei der Ausführung des Kantenerkennungsalgorithmus eine Kantendetektion durch die Anwendung eines Sobel-Operators in zumindest einer Vorzugsrichtung des Einzelbilds, vorzugsweise in zwei orthogonalen Vorzugsrichtungen des Einzelbilds, durchgeführt.

Der Sobel-Operator ist ebenfalls ein Faltungsoperator, der als diskreter Differenzierer wirkt. Durch die Faltung des Bildes mit dem Sobel-Operator erhält man die partiellen Ableitungen der Grauwertfunktion in den zwei orthogonalen Vorzugsrichtungen. Hieraus kann dann die Kantenrichtung und Kantenstärke bestimmt werden.

Nach der Differenzierung der Grauwertdaten wird anschließend eine Kantenfilterung durchgeführt. Dies kann beispielsweise mittels einer sogenannten non-maximum suppression erfolgen, die sicherstellt, dass nur die Maxima entlang einer Kante erhalten bleiben, so dass eine Kante senkrecht zu ihrer Erstreckungsrichtung nicht breiter als ein Pixel ist.

Nach der Filterung kann dann eine schwellenwertbasierte Ermittelung der Bildkoordinaten der Kontur des zu erkennenden Objekts, wie beispielsweise des Fotos 11 oder des Sicherheitselements 13, durchgeführt werden. Es wird also ermittelt, ab welcher Kantenstärke ein Pixel zu einer Kante zu zählen ist.

Hierzu kann beispielsweise ein Hysterese-basiertes Verfahren angewendet werden. Man legt hierzu zwei Schwellenwerte T₁ und T₂ fest, wobei T₂ größer ist als T₁. Ein Pixel mit einer Kantenstärke größer T₂ wird als Bestandteil einer Kante betrachtet. Alle mit diesem Pixel verbundenen Pixel mit einer Kantenstärke größer als T₁ werden ebenfalls dieser Kante zugerechnet.

Man erhält somit die Bildkoordinaten aller einer Kante des zu erkennenden Objekts, wie beispielsweise des Fotos 11 oder des Sicherheitselements 13, zugehörigen Pixel in dem untersuchten Einzelbild. Diese können weiter analysiert werden, beispielsweise um einfache geometrische Formen zu erkennen.

Neben dem oben beschrieben Abgleich der Bilder des Sicherheitsdokuments 10 und des Dokumentenhalters 30 mit den zugeordneten, in der Datenbank 40 gespeicherten Informationen wird die Information des Speichermediums 12 ebenfalls mit auf der Datenbank 40 hinterlegten Informationen und mit bereits erfassten Informationen abgeglichen, vorzugsweise von der Steuervorrichtung des AR-Systems 20 abgeglichen.

Hierzu wird geprüft, ob beispielsweise ein auf dem Speichermedium 12 hinterlegtes Foto des Dokumentenhalters 30 mit dem erfassten Foto des Dokumenthalters 30 und dem Foto 11 des Sicherheitsdokuments 10 übereinstimmt. Bezüglich des Überprüfens einer solchen Übereinstimmung ist auf obige Ausführungen der Bildverarbeitungsalgorithmen verwiesen. Des Weiteren kann ein zusätzlich in der Datenbank 40 hinterlegtes Foto zu einem weiteren Abgleich mit dem Foto 11 des Sicherheitsdokuments 10 herangezogen werden.

Die Ergebnisse der Überprüfung oder die für die Überprüfung benötigten Daten werden von der Datenbank zu dem AR-System 20 über eine Kommunikationsverbindung 60 übertragen und dem Anwender 50 über die Ausgabevorrichtung 21 ausgegeben. So können beispielsweise Unstimmigkeiten/Widersprüche auf dem Sicherheitsdokument, abweichende bzw. unstimmige Sicherheitsmerkmale, inhaltliche Informationen oder anatomisch-physiologische Merkmale mittels der Ausgabevorrichtung 21 dem Anwender 50 eingeblendet werden. Des Weiteren können die Ergebnisse auf der Datenbank 40 gespeichert werden.

Neben den Ergebnissen der Überprüfung können auch die erfassten Informationen des Sicherheitsdokuments 10 dem Anwender 50 ausgegeben werden. So können beispielsweise die erfassten Informationen entsprechend ihrer Relevanz für den Anwender 50 mittels der Ausgabevorrichtung 21 des AR-Systems 20 ausgegeben werden.

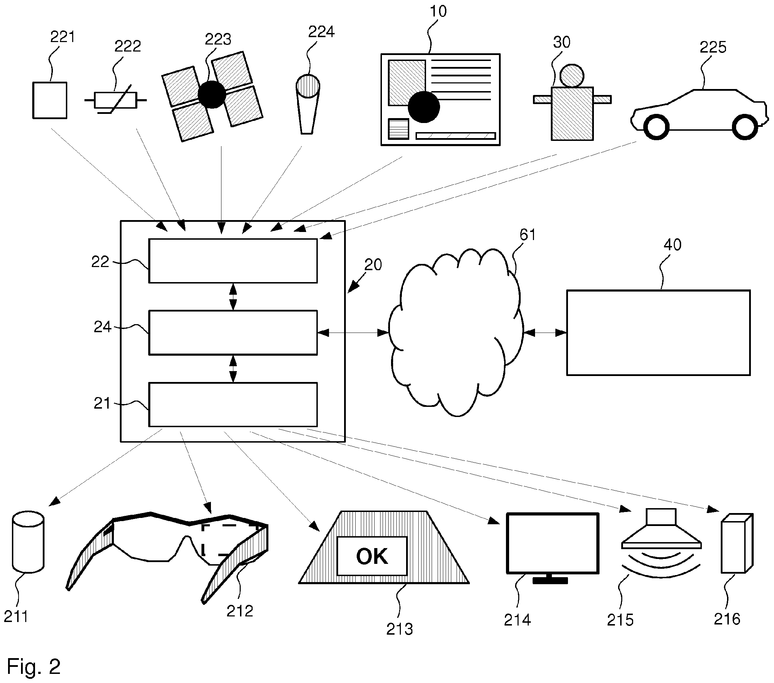

Fig. 2 zeigt eine schematische Darstellung eines Prüfsystems mit dem AR-System 20. Das AR-System 20 weist die Erfassungseinrichtung 22, die Ausgabevorrichtung 21 und die Steuervorrichtung 24 auf.

Die Erfassungseinrichtung 22 erfasst hierbei eine Vielzahl von unterschiedlichen Informationen. Diese Informationen können mittels geeigneter Sensoren, wie beispielsweise Kameras, Positionsbestimmungssystemen, Temperatursensoren, Mikrophonen, Feuchtigkeitssensoren oder Photodetektoren erfasst werden. So ist die Erfassungseinrichtung 22 in Fig. 2 derart ausgestaltet, dass diese Informationen über die Luftfeuchtigkeit 221 und die Temperatur 222 der räumlichen Umgebung, die Position 223 des AR-Systems 20, akustischer Signale 224 der räumlichen Umgebung, eines Sicherheitsdokuments 10, eines Dokumentenhalters 30 und eines Fahrzeugs 225 erfasst. Hierdurch ist es beispielsweise möglich, neben den Informationen des Sicherheitsdokuments 10 und des Dokumentenhalters 30 weitere Informationen in den Prüfprozess mit einzubeziehen. So kann beispielsweise im Rahmen einer Verkehrskontrolle das Kfz-Kennzeichen des Fahrzeugs 225 des Dokumentenhalters 30 in den Prüfprozess einbezogen werden und beispielsweise eine Plausibilitätsprüfung durchgeführt werden.

Bezüglich einer möglichen Ausgestaltung des Sicherheitsdokuments 10 wird auf die Ausführungen der Fig. 1 verwiesen.

Die Steuervorrichtung 24 überprüft die von der Erfassungseinrichtung 22 erfassten Informationen durch Abgleich mit der Datenbank 40. Hierzu können die erfassten Informationen über eine Kommunikationsschnittstelle an die Datenbank 40 übermittelt werden oder von der Datenbank 40 den erfassten Informationen zugeordnete Informationen angefordert werden.

Die Steuervorrichtung umfasst vorzugsweise eine Hardware-Plattform, vorzugsweise mit ein oder mehreren Prozessen, einem Speicher und ein oder mehrere Ausgabebaugruppen; eine Softwareplattform, insbesondere umfassend ein Betriebssystem; und ein oder mehrere hierauf ablaufende Applikationsprogramme, welche bei ihrer Ausführung die Funktionen der Steuervorrichtung erbringen.

Im Weiteren wird bezüglich der Überprüfung der Informationen auf die Ausführungen der Fig. 1 verwiesen.

Die Überprüfung der erfassten Informationen kann, wie bereits oben ausgeführt, in der Steuervorrichtung 24 vorgenommen werden. Die zur Überprüfung erforderlichen Daten werden hiervon der Datenbank 40 abgerufen. Ebenfalls können beispielsweise rechenintensive Überprüfungen wie beispielsweise die Überprüfung von Bildern auf Echtheit in der Datenbank 40 ausgeführt werden, wohingegen beispielsweise Überprüfungen von Zeichenketten in der Steuervorrichtung 24 vorgenommen werden.

Im Weiteren ist es möglich, dass die Datenbank und/oder Teile der Datenbank auf der Steuervorrichtung 24 des AR-Systems 20 hinterlegt sind, insbesondere einem Speichermedium der Steuervorrichtung 24 des AR-Systems 20 hinterlegt sind. Dies ermöglicht einen ortsunabhängigen Einsatz des AR-Systems 20, beispielsweise im Rahmen von Personenkontrollen.

Im Weiteren ist es möglich, dass das AR-System 20 über eine Vorrichtung, wie beispielsweise eine Photodiode verfügt, um die Beleuchtungsstärke zu messen. Unterschreitet die Beleuchtungsstärke einen vorbestimmten Schwellenwert, bevorzugt von weniger als 800 Ix, wird eine Lichtquelle des AR-Systems 20 aktiviert, so dass eine ausreichende Ausleuchtung des Sicherheitsdokuments 10 gewährleistet ist. Bei der Lichtquelle des AR-Systems 20 handelt es sich bevorzugt um eine Anordnung aus LEDs, welche insbesondere weißes Licht, insbesondere Tageslicht abstrahlen.

Der Abgleich mit der Datenbank 40 wird vorzugsweise über eine gesicherte Internetverbindung 61 durchgeführt. So können die übertragenen Daten beispielsweise in verschlüsselter Form übertragen werden. Zur Verschlüsselung werden Verschlüsselungsalgorithmen verwendet.

Die Ergebnisse der Überprüfung werden mittels der Ausgabevorrichtung 21 ausgegeben. Die Ausgabe der Ergebnisse der Überprüfung kann, wie in Fig. 2 gezeigt, an ein Speichermedium 211 erfolgen. Dieses Speichermedium 211 kann beispielsweise ein transportables Speichermedium wie ein USB-Speicherstick oder eine Festplatte sein. Die Ausgabe kann in visueller Form über einen Infoscreen 212 einer Datenbrille, über ein Head-up-Display 213 oder über einen Bildschirm 214 erfolgen. Die Ausgabe kann im Weiteren in akustischer Form über einen Lautsprecher 215 erfolgen. So kann beispielsweise eine Ausgabe an einen Anwender des AR-Systems 20 mittels eines Kopfhörers erfolgen. Ebenfalls ist es möglich, dass die Ausgabe für einen Anwender in fühlbarer Form erfolgt, beispielsweise durch ein Piezoelement 216, welches einen Druckreiz auf den Anwender ausübt.

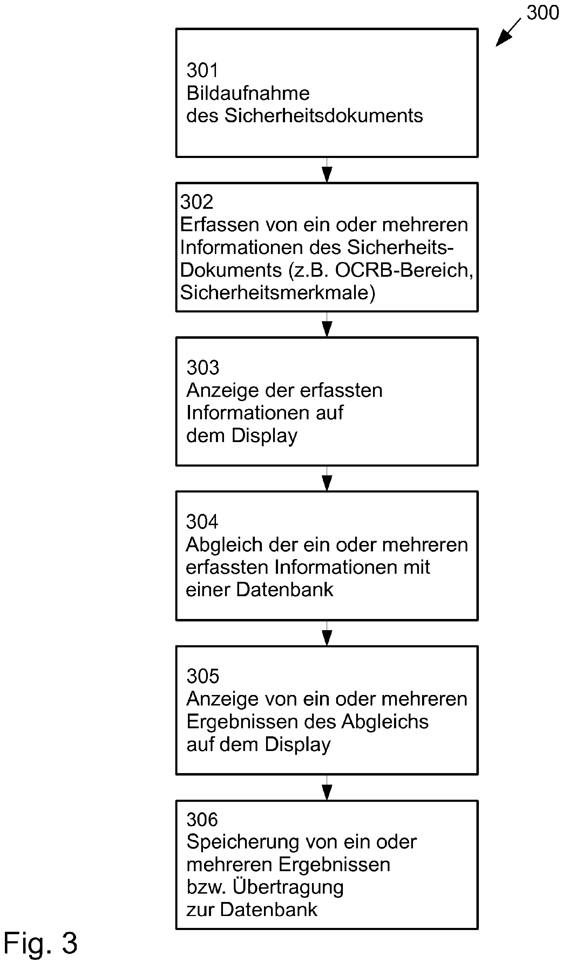

Fig. 3 zeigt ein Flussdiagramm. Das Flussdiagramm der Fig. 3 stellt einen exemplarischen Ablauf eines Prüfprozesses 300 dar, welcher von der Steuervorrichtung 24 gesteuert wird. Der Prüfprozess 300 kann selbstverständlich durch die Erfassung weiterer Informationen, wie beispielsweise in Fig. 2 beschrieben, erweitert werden. Auch können die Ergebnisse gemäß obigen Ausführungen in visueller, akustischer und/oder fühlbarer Form ausgegeben werden.

In Schritt 301 wird von der Erfassungseinrichtung 22, angesteuert von der Steuervorrichtung 24, zunächst ein Bild des Sicherheitsdokuments aufgenommen. Dies erfolgt beispielsweise mittels einer Kamera einer Datenbrille.

In Schritt 302 werden ein oder mehrere Informationen, wie beispielsweise der maschinenlesbare Bereich, des Sicherheitsdokuments erfasst. So kann beispielsweise der Dokumententyp mittels des maschinenlesbaren Bereichs bestimmt werden oder personenbezogene Daten erfasst werden.

In Schritt 303 werden die ein oder mehreren erfassten Informationen, angesteuert von der Steuervorrichtung 24, vorzugsweise mittels der Ausgabevorrichtung 21 ausgegeben, beispielsweise auf einem Display, wie beispielsweise dem Infoscreen der Datenbrille, angezeigt. Hier können beispielsweise die ein oder mehreren erfassten Informationen gemäß ihrer Relevanz für den Prüfprozess angezeigt werden. Die Relevanz für den Prüfprozess wird beispielsweise durch den Dokumententyp festgelegt. So können bei einer Personenkontrolle beispielsweise zuerst der Name und die Adresse des Dokumentenhalters angezeigt werden.

In Schritt 304 werden die ein oder mehreren erfassten Information von der Steuervorrichtung 24 durch Abgleich mit der Datenbank 40 überprüft. Bezüglich der Überprüfung der ein oder mehreren erfassten Information durch Abgleich mit der Datenbank wird auf obige Ausführungen verwiesen.

In Schritt 305 werden, angesteuert durch die Steuervorrichtung 24, ein oder mehrere Ergebnisse der Überprüfung der ein oder mehreren erfassten Informationen mittels der Ausgabevorrichtung 20 ausgegebenen, beispielsweise mittels eines Displays, angezeigt. Hierbei ist es vorteilhaft, die ein oder mehreren Ergebnisse bezüglich ihrer Priorität zu ordnen. So können beispielsweise Unstimmigkeiten oder ein Hinweis, dass es sich um eine gesuchte Person handelt, zuerst aufgeführt sein.

In Schritt 306 werden ein oder mehrere der Ergebnisse der Überprüfung der ein oder mehreren erfassten Informationen angesteuert von der Steuervorrichtung 24 gespeichert und/oder zur Datenbank 40 übertragen. Sind Überprüfungen beispielsweise von der Steuervorrichtung 24 durchführt worden, werden die Ergebnisse der Überprüfung vorzugsweise an die Datenbank 40 übertragen und dort gespeichert.

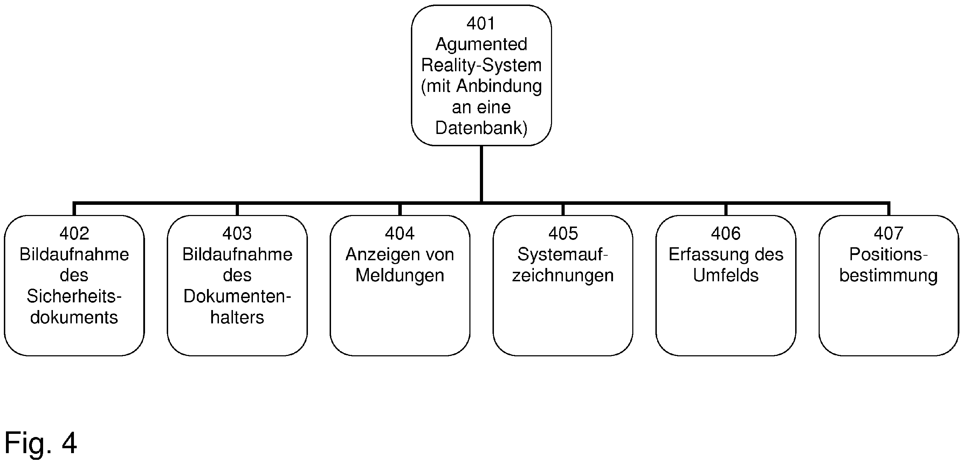

Vorteilhafte Detailausgestaltungen des Prüfprozesses 300 werden im Folgenden anhand der Diagramme der Fig. 4 bis Fig. 7 erläutert:
Die Fig. 4 bis Fig. 7 stellen die Erfassung und Prüfung eines Sicherheitsdokuments mittels eines AR-Systems dar. Das AR-System 401 zur Durchführung des in den Fig. 4 bis Fig. 7 spezifizierten Prozesses ist hierbei vorzugsweise wie das AR-System 20 nach Fig. 1 und Fig. 2 ausgestaltet, so dass hierzu auf die obigen Ausführungen verwiesen wird. Das AR-System 401 verfügt vorzugsweise über eine Anbindung an eine Datenbank und kann hierbei ortsgebunden, beispielsweise durch Sicherheitspersonal an Flughäfen oder Grenzbeamte, oder ortsungebunden/mobil, beispielsweise bei Personenkontrollen oder Verkehrskontrollen, eingesetzt werden.

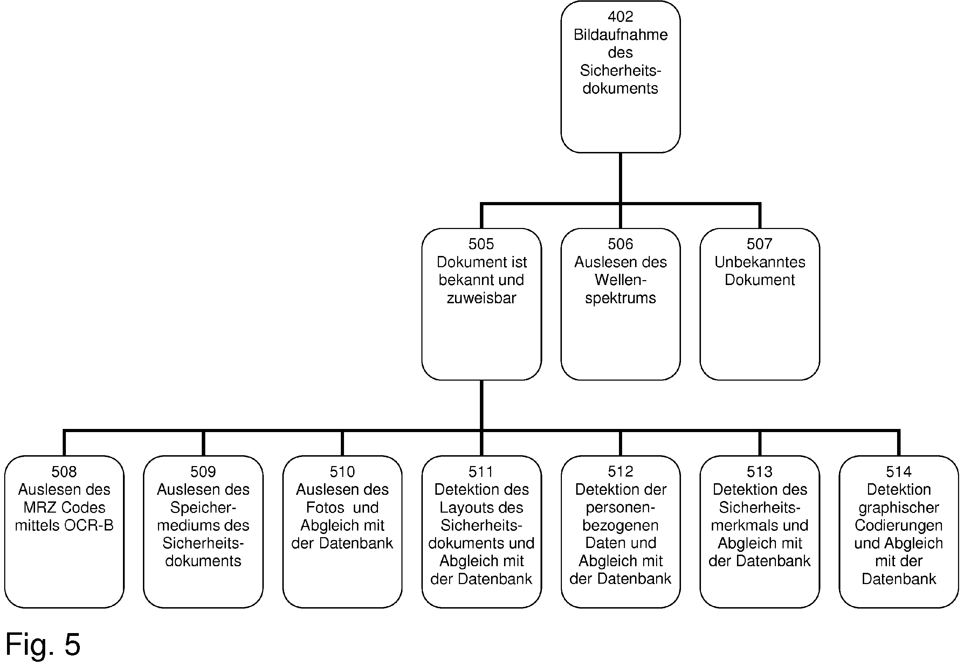

Das AR-System 401 erfasst zunächst in einem Schritt 402 das Sicherheitsdokument wie in Fig. 4 gezeigt. Hierbei wird, wie in Fig. 5 gezeigt, in einem Schritt 505 zunächst festgestellt, ob das Sicherheitsdokument bekannt bzw. zuweisbar ist. Ist das Sicherheitsdokument bekannt und zuweisbar, werden die Informationen des Sicherheitsdokuments ausgelesen.

So kann beispielsweise in einem Schritt 508 der maschinenlesbare Bereich (engl. MRZ: maschine readable zone) ausgelesen werden. Für den maschinenlesbaren Bereich wird beispielsweise für die Beschriftung die OCR-B Schrift verwendet. Bei der OCR-B Schrift besitzt jedes Zeichen die gleiche Laufweite und dadurch ist speziell darauf ausgelegt, für Maschinen lesbar zu sein.

Ist der maschinenlesbare Bereich erfassbar bzw. entschlüsselbar, wird die Information des maschinenlesbaren Bereichs mit der Datenbank abgeglichen. Hierbei ist es beispielsweise möglich, dass das Ergebnis des Abgleichs einen Hinweis ergibt oder in einem Widerspruch zu weiteren Informationen des Sicherheitsdokuments steht, so dass dem Anwender ein Alarmhinweis ausgeben wird. Auch ist es möglich, dass in der Datenbank weitere Informationen mit Bezug zu dem überprüften Sicherheitsdokument hinterlegt sind, wie beispielsweise eine Vermisstenanzeige oder eine Fahndungsmeldung, so dass dem Anwender ein entsprechender Alarmhinweis ausgeben wird. Sind alle überprüften Informationen echt bzw. keine weiteren Informationen in der Datenbank hinterlegt, wird dem Anwender ein entsprechender Hinweis ausgegeben.

Ist der maschinenlesbare Bereich nicht erfassbar, wird dem Anwender ein entsprechender Warnhinweis ausgeben. Des Weiteren wird ein Abgleich mit der Datenbank durchgeführt, um festzustellen, ob diese Unstimmigkeit bereits bekannt ist oder erstmals erfasst wurde.

Unter nicht erfassbar wird hierbei verstanden, dass die Überprüfung durch Vergleich mit der Datenbank Abweichungen bzw. Unstimmigkeiten aufgefunden hat bzw. dass die Informationen aufgrund von Störfaktoren wie Verschmutzung und/oder Abschirmung nicht erfasst werden können.

Im Weiteren kann beispielsweise in einem Schritt 509 das Speichermedium des Sicherheitsdokuments ausgelesen werden. Das Speichermedium kann biometrische Informationen enthalten, wie beispielsweise Fingerabdrücke, Körpermaße oder ein Foto des Dokumentenhalters.

Ist der Inhalt des Speichermediums des Sicherheitsdokuments erfassbar bzw. entschlüsselbar, wird die Information des Speichermediums mit der Datenbank abgeglichen. Hierbei ist es beispielsweise möglich, dass das Ergebnis des Abgleichs einen Hinweis bezüglich Unstimmigkeiten ergibt oder in einem Widerspruch zu weiteren Informationen des Sicherheitsdokuments steht, so dass dem Anwender ein entsprechender Alarmhinweis ausgeben wird. Auch ist es möglich, dass in der Datenbank weitere Informationen mit Bezug zu dem überprüften Sicherheitsdokument hinterlegt sind, wie beispielsweise eine Vermisstenanzeige oder eine Fahndungsmeldung, so dass dem Anwender ein entsprechender Alarmhinweis ausgeben wird. Sind alle überprüften Informationen echt bzw. keine weiteren Informationen in der Datenbank hinterlegt, wird dem Anwender ein entsprechender Hinweis ausgegeben.

Ist der Inhalt des Speichermediums des Sicherheitsdokuments nicht erfassbar, wird dem Anwender ein entsprechender Warnhinweis ausgegeben. Des Weiteren wird ein Abgleich mit der Datenbank durchgeführt, um festzustellen, ob diese Unstimmigkeit bereits bekannt ist oder erstmals erfasst wurde.

Im Weiteren kann beispielsweise in einem Schritt 510 das Foto des Sicherheitsdokuments erfasst und mit der Datenbank abgeglichen werden.

Hierbei wird zunächst überprüft, ob das Foto beispielsweise mit einem in der Datenbank hinterlegten kongruent ist. Ist im Weiteren, wie in Fig. 4 dargestellt, optional in einem Schritt 403 ein Bild des Dokumentenhalters erfasst worden, kann dieses ebenfalls mit dem in der Datenbank hinterlegten Foto und/oder dem Foto des Sicherheitsdokuments in einem Schritt 510 auf Übereinstimmung geprüft werden. Stimmt das Foto des Sicherheitsdokuments nicht mit dem Foto des Dokumenthalters überein, kann beispielsweise ein Hinweis auf manuelle Überprüfung angezeigt werden. Auch ist es möglich, dass in der Datenbank weitere Informationen mit Bezug zu dem überprüften Sicherheitsdokument hinterlegt sind, wie beispielsweise eine Vermisstenanzeige oder eine Fahndungsmeldung, so dass dem Anwender ein entsprechender Alarmhinweis ausgeben wird. Sind alle überprüften Informationen echt bzw. keine weiteren Informationen in der Datenbank hinterlegt, wird dem Anwender ein entsprechender Hinweis ausgegeben.

Ist das Foto des Sicherheitsdokuments nicht erfassbar, wird dem Anwender ein entsprechender Warnhinweis ausgegeben.

Im Weiteren kann beispielsweise in einem Schritt 511 das Dokumentenlayout des Sicherheitsdokuments detektiert und mit der Datenbank abgeglichen werden.

Ist das Dokumentenlayout einem Dokumententyp zuweisbar und steht in keinem Widerspruch zu weiteren Informationen des Sicherheitsdokuments, wird dem Anwender ein entsprechender Hinweis ausgegeben. Ergibt das Ergebnis des Abgleichs einen Hinweis oder steht in einem Widerspruch zu weiteren Informationen des Sicherheitsdokuments, so wird dem Anwender ein entsprechender Alarmhinweis ausgegeben.

Ist das Dokumentenlayout keinem Dokumententyp zuweisbar, wird dem Anwender ein entsprechender Warnhinweis ausgegeben. Des Weiteren wird ein Abgleich mit der Datenbank durchgeführt, um festzustellen, ob diese Unstimmigkeit bereits bekannt ist oder erstmals erfasst wurde.

Im Weiteren kann beispielsweise in einem Schritt 512 der Bereich mit personenbezogenen Daten des Sicherheitsdokuments ausgelesen und mit der Datenbank abgeglichen werden.

Stimmen die personenbezogenen Daten mit den in der Datenbank hinterlegten Daten überein bzw. stehen in keinem Widerspruch zu weiteren Informationen des Sicherheitsdokuments, wird dem Anwender ein entsprechender Hinweis ausgegeben. Ergibt das Ergebnis des Abgleichs mit der Datenbank einen Hinweis bezüglich Unstimmigkeiten oder steht in einem Widerspruch zu weiteren Informationen des Sicherheitsdokuments, so wird dem Anwender ein entsprechender Alarmhinweis ausgegeben. Hierbei ist es auch möglich, dass nicht nur zwischen einem Hinweis oder Warnhinweis unterschieden wird, sondern dass z. B. eine Maßzahl (z. B. eine Zahl zwischen 0 und 100) ausgegeben wird, die ein Maß dafür ist, ob das Sicherheitsdokument zum Dokumentenhalter gehört. Dies würde dem Anwender zusätzliche Informationen über die Abgesichertheit des Hinweises bzw. Warnhinweises liefern.

Können die personenbezogenen Daten des Sicherheitsdokuments nicht erfasst werden, wird dem Anwender ein entsprechender Warnhinweis ausgegeben. Des Weiteren kann beispielsweise bei einem Widerspruch innerhalb der personenbezogenen Daten ein Hinweis bezüglich der aufgefundenen Abweichung ausgegeben werden.

Im Weiteren können beispielsweise in einem Schritt 513 die Sicherheitselemente des Sicherheitsdokuments erfasst und mit der Datenbank abgeglichen werden.

Hierbei wird zunächst das Vorliegen der Sicherheitselemente auf dem Sicherheitsdokument überprüft. Dies kann beispielsweise über die Erkennung der Formgebung mittels Bildverarbeitungsalgorithmen wie beispielsweise des Haar-Cascade-Algorithmus oder des Canny-Algorithmus erfolgen. Bezüglich dieser beiden Algorithmen sei hier auf obige Ausführungen verwiesen. Des Weiteren können auch andere Bilderkennungsalgorithmen verwendet werden. Die Überprüfung des Vorliegens der Sicherheitselemente des Sicherheitsdokuments kann dabei beispielsweise ergeben, dass die Sicherheitselemente des Sicherheitsdokuments mit den in der Datenbank hinterlegten Sicherheitselementen des Sicherheitsdokuments übereinstimmen oder im Widerspruch zu dem Sicherheitsdokument stehen. Hierüber erhält der Anwender einen entsprechenden Hinweis.

Auch ist es möglich, dass die Datenbank weitere Informationen mit Bezug zu dem überprüften Sicherheitselement des Sicherheitsdokuments umfasst, wie beispielsweise eine Animation des Sicherelements, insbesondere bei speziellen blickwinkel- oder beleuchtungswinkelabhängigen optischen Effekten eines OVDs, oder Detailinformationen des Sicherheitselements.

Hierbei ist es auch möglich, dass die Datenbank neben den zusätzlichen Informationen bezüglich der Sicherheitselemente weitere Informationen umfasst, welche während des Prüfprozesses ermittelt werden. Bezüglich dieser weiteren Informationen sei auf die weiteren Ausführungen und auf obige Ausführungen verwiesen.

Sind die Sicherheitselemente nicht erfassbar, wird dem Anwender ein entsprechender Warnhinweis ausgegeben. Des Weiteren wird ein Abgleich mit der Datenbank durchgeführt, um festzustellen, ob diese Unstimmigkeit bereits bekannt ist oder erstmals erfasst wurde.

Im Weiteren können beispielsweise in einem Schritt 514 graphische Codierungen des Sicherheitsdokuments ausgelesen werden und mit der Datenbank abgeglichen werden. Graphische Codierungen können beispielsweise Guillochen oder andere spezielle Muster, Motive oder Ornamente sein.

Hierbei ist beispielsweise möglich, dass das Ergebnis des Abgleichs der graphischen Codierungen mit der Datenbank einen Hinweis bezüglich Unstimmigkeiten ergibt oder in einem Widerspruch zu weiteren Informationen des Sicherheitsdokuments steht, so dass dem Anwender ein entsprechender Alarmhinweis ausgegeben wird. Auch ist es möglich, dass in der Datenbank weitere Informationen mit Bezug zu dem überprüften Sicherheitsdokument hinterlegt sind, wie beispielsweise Hinweise auf Fälschungen, so dass dem Anwender ein Alarmhinweis ausgegeben wird. Sind alle überprüften Informationen echt bzw. keine weiteren Informationen in der Datenbank hinterlegt, wird dem Anwender ein entsprechender Hinweis ausgegeben.

Sind die graphischen Codierungen des Sicherheitsdokuments nicht erfassbar, wird dem Anwender ein entsprechender Warnhinweis ausgegeben. Des Weiteren wird ein Abgleich mit der Datenbank durchgeführt, um festzustellen, ob diese Unstimmigkeit bereits bekannt ist oder erstmals erfasst wurde.

Ist das Sicherheitsdokument nicht bekannt, wird in einem Schritt 507 dem Anwender ein entsprechender Alarmhinweis ausgegeben. Optional kann eine Detailerfassung des Sicherheitsdokuments erfolgen, um die Merkmale des unbekannten Sicherheitsdokuments in die Datenbank aufzunehmen. Des Weiteren kann ein Abgleich der Detailerfassung des Sicherheitsdokuments mit der Datenbank durchgeführt werden, um festzustellen, ob bestimmte Merkmale des unbekannten Sicherheitsdokuments bereits bekannt sind.

Auch ist es möglich, das Wellenspektrum des Sicherheitsdokuments in einem Schritt 506 zu erfassen. Das erfasste Wellenspektrum kann mit der Datenbank, beispielsweise auf Übereinstimmungen mit dem Dokumententyp, abgeglichen werden. Die Ergebnisse der Überprüfung können dem Anwender angezeigt werden.

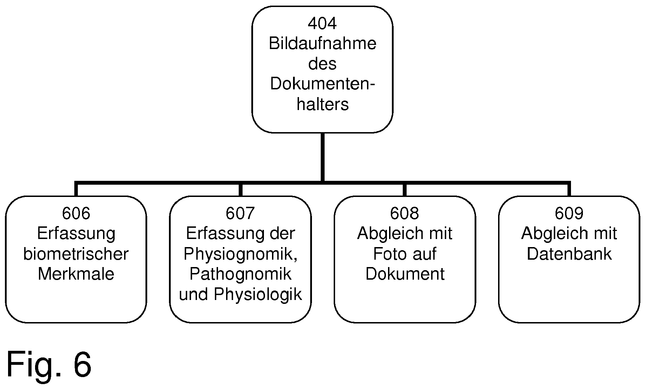

Optional erfasst das AR-System 401 in einem Schritt 403 den Dokumentenhalter, wie in Fig. 4 gezeigt. Hierbei werden, wie in Fig. 6 gezeigt, zunächst beispielsweise die biometrischen Merkmale des Dokumenthalters in einem Schritt 606 erfasst. Hierbei kann es sich beispielsweise um ein Foto des Gesichts des Dokumentenhalters handeln. Die biometrischen Merkmale des Dokumentenhalters können beispielsweise mit den biometrischen Daten des Speichermediums des Sicherheitsdokuments, dem Foto des Sicherheitsdokuments in einem Schritt 608 oder der Datenbank in einem Schritt 609 abgeglichen werden.

Bezüglich des Abgleichs mit den biometrischen Daten des Speichermediums des Sicherheitsdokuments, dem Foto des Sicherheitsdokuments oder der Datenbank wird auf obige Ausführungen verwiesen.

Mögliche Unstimmigkeiten können mittels optischer Einblendungen dem Sicherheitsdokument oder dem Dokumententräger überlagert werden. So können beispielsweise abweichende anatomisch-physiologische Merkmale dem Dokumentenhalter überlagert werden.

Stimmen die erfassten biometrischen Merkmale des Dokumententrägers mit den biometrischen Daten des Speichermediums des Sicherheitsdokuments, dem Foto des Sicherheitsdokuments oder der Datenbank, überein, kann dem Anwender ein entsprechender Hinweis ausgegeben werden.

Im Weiteren können Informationen, welche ein oder mehrere Parameter umfassen, die eine Pathognomik, Physiognomik und/oder Physiologik des Dokumententrägers spezifizieren, in einem Schritt 607 erfasst werden. Die Pathognomik betrifft hierbei die Stimmungslage, die Physiognomik die Gesichtszüge und die Physiologik die Gefühlsregungen des Dokumententrägers, welche beispielsweise durch Anpassung der Software und/oder Hardware des AR-Systems bestimmt werden können. Neben den bereits erwähnten Bereichen der Pathognomik, der Physiognomik und/oder der Physiologik können selbstverständlich weitere Kriterien verwendet werden. Die ein oder mehreren Parameter können beispielsweise durch Vergleich mit Wertetabellen dem Dokumentenhalter ein Stimmungsbild zuweisen. Durch derartige Informationen wird es ermöglicht, das Stimmungsbild des Dokumentenhalters zu bestimmen und Auffälligkeiten bzw. Hinweise dem Anwender auszugeben.

Optional kann das AR-System 401 in einem Schritt 404 Meldungen und Mitteilungen, wie beispielsweise Meldungen von Behörden oder anderen Dokumentenprüfstellen, Mitteilungen von Kollegen oder Leitstellen, ausgeben. Hierdurch kann eine effiziente und schnelle Überprüfung gewährleistet werden und beispielsweise die Sicherheit des Anwenders während des Prüfprozesses erhöht werden.

Im Weiteren kann das AR-System 401, wie in Fig. 4 gezeigt, eine Systemaufzeichnung in einem Schritt 405 durchführen. Unter Systemaufzeichnung wird hierbei das Speichern der erfassten Informationen, der Ergebnisse der durchgeführten Überprüfungen und/oder des Anwenders verstanden.

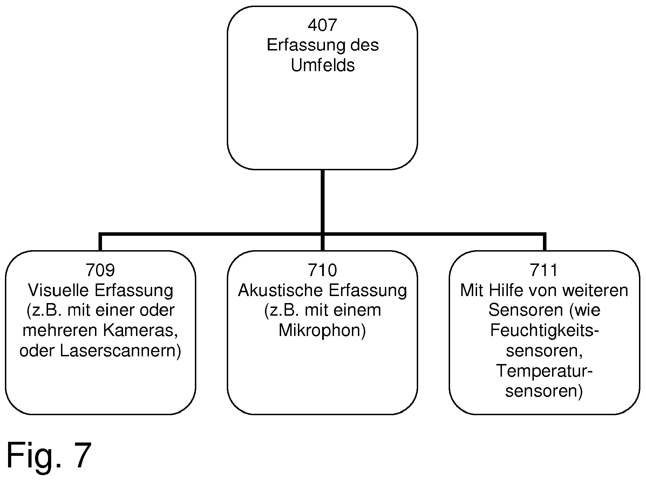

Optional kann das AR-System 401, wie in Fig. 4 gezeigt, weitere Informationen des räumlichen Umfelds in einem Schritt 406, insbesondere bei einer ortsungebunden/mobilen Verwendung des AR-Systems 401, erfassen. Hierbei werden, wie in Fig. 7 gezeigt, zunächst weitere Informationen erfasst. So können beispielsweise in einem Schritt 709 weitere Informationen visuell, beispielsweise mittels einer oder mehrerer Kameras oder mittels eines Laserscanners, erfasst werden. Beispielsweise kann eine weitere visuell erfasste Information das Kfz-Kennzeichen des Dokumentenhalters sein. Auch ist es möglich, in einem Schritt 710 weitere Informationen akustisch, beispielsweise mittels eines Mikrophons, zu erfassen. Eine solche Information kann beispielsweise die Stimme des Dokumentenhalters betreffen. So kann beispielsweise die erfasste Stimme mittels einer Frequenzanalyse mit der Datenbank abgeglichen werden, insbesondere eine Aussage hinsichtlich der (Mutter)-Sprache und/oder dem Dialekt ermöglichen und/oder festgestellte Änderungen in der Stimme einen Hinweis für eventuelle Lügen oder Falschaussagen liefern. Auch ist es möglich, in einem Schritt 711 weitere Umgebungsinformationen durch weitere Sensoren wie beispielsweise Feuchtigkeitssensoren, eine Infrarotkamera oder Temperatursensoren zu erfassen. Beispielweise lassen sich durch die Erfassung und Analyse der Körpertemperatur Rückschlüsse auf Krankheitssymptome ziehen und/oder mittels Analyse der Gesichtsdurchblutung Indizien für beispielsweise Nervosität als Folge einer Falschaussage feststellen. Eine Einbeziehung der weiteren Informationen bezüglich des räumlichen Umfelds kann die Überprüfung des Sicherheitsdokuments weiter verbessern.

Optional kann das AR-System 401 wie in Fig. 4 weiter eine Positionsbestimmung in einem Schritt 407 durchführen. Bezüglich der Positionsbestimmung ist hierauf obige Ausführungen verwiesen. Die Informationen bezüglich der Positionsbestimmung des AR-Systems können im Weiteren insbesondere für ortsbezogene Bezüge zu weiteren Prüfungen des Sicherheitsdokuments bzw. zu Querverweisen auf Orte anderer Prüfungen herangezogen werden.

## Patentansprüche

1. Verfahren zur Prüfung eines Sicherheitsdokuments (10), wobei das Sicherheitsdokument (10) ein Ausweisdokument, ein Visum, ein Geburts-Zertifikat, eine Banknote, ein Wertpapier oder eine Kreditkarte ist, mit den Schritten:
- Erfassen von ein oder mehreren ersten Informationen des Sicherheitsdokuments (10) mittels eines AR-Systems (20), insbesondere einer Datenbrille;
- Überprüfen der ein oder mehreren ersten Informationen durch Abgleich mit einer Datenbank (40), wobei die Datenbank ein Zentralrechner oder eine Cloud aus einer Vielzahl von vernetzten, gemeinsam berechnenden Einzelrechnern ist;
- Speicherung von ein oder mehreren Ergebnissen der Überprüfung der ein oder mehreren ersten Informationen und Ausgabe von ein oder mehreren Ergebnissen der Überprüfung der ein oder mehreren ersten Informationen mittels des AR-Systems (20).
- Erfassen von ein oder mehreren zweiten Informationen des Dokumentenhalters (30), insbesondere eines Ausweisträgers, mittels des AR-Systems (20), wobei bei der Überprüfung der ein oder mehreren ersten Informationen die ein oder mehreren ersten Informationen oder ein oder mehrere Informationen aus der Datenbank (40) mit ein oder mehreren der zweiten Informationen abgeglichen werden;
wobei beim Überprüfen der ein oder mehreren ersten Informationen, ein oder mehrere Zusatzinformation aus der Datenbank (40) als zumindest ein Ergebnis der Prüfung ermittelt wird; und
wobei die ein oder mehreren ersten Informationen Informationen über das optische Erscheinungsbild von optisch variablen Sicherheitsmerkmalen des Sicherheitsdokuments umfassen, welche durch Reliefstrukturen, insbesondere diffraktive Strukturen, Beugungsstrukturen nullter Ordnung, Blazegitter, Makrostrukturen, insbesondere Linsenstrukturen oder Mikroprismenstrukturen, Spiegelflächen, Mattstrukturen, insbesondere anisotrope oder isotrope Mattstrukturen oder Kombinationen dieser Strukturen optisch erfassbar generiert werden.

2. Verfahren nach Anspruch 1,
**dadurch gekennzeichnet,**
**dass** vor und/oder während des Erfassens von ein oder mehreren der ersten Informationen des Sicherheitsdokuments (10) mittels des AR-Systems (20), insbesondere einer Datenbrille, Instruktionen angezeigt werden, in welcher Relativlage und/oder in welchem Abstand zum AR-System (20) das Sicherheitsdokument (10) während des Erfassens der ein oder mehreren ersten Informationen zu halten und/oder bewegen ist.

3. Verfahren nach einem der vorherigen Ansprüche,
**dadurch gekennzeichnet,**
**dass** die ein oder mehreren ersten Informationen Informationen über Sicherheitsmerkmale (13), Fotos (11), kodierte Kennungen (14) und personenbezogene Daten (15), insbesondere Name, Adresse und Geburtsdatum, umfassen.

4. Verfahren nach einem der vorherigen Ansprüche,
**dadurch gekennzeichnet,**
**dass** beim Erfassen der ein oder mehreren ersten Informationen ein oder mehrere der ersten Informationen optisch, elektromagnetisch, magnetisch, elektrisch und/oder elektronisch maschinell aus dem Sicherheitsdokument (10) ausgelesen werden, insbesondere
**dass** der Schritt des Auslesens das Auslesen aus ein oder mehreren Speichermedien (12) des Sicherheitsdokuments (10) umfasst, und/oder
**dass** der Schritt des Auslesens das Auslesen von nicht für den menschlichen Betrachter visuell erkennbaren ein oder mehreren optischen ersten Informationen umfasst, welche insbesondere mit einem oder mehreren Bilderfassungssystemen, vorzugsweise IR-Kameras, maschinell ausgelesen werden.

5. Verfahren nach Anspruch 1,
**dadurch gekennzeichnet,**
**dass** die ein oder mehreren zweiten Informationen des Dokumentenhalters (30) biometrische Informationen, insbesondere des Kopfes, sind und durch einen Bildverarbeitungsalgorithmus, insbesondere Gesichtserkennungsalgorithmus, bestimmt werden.

6. Verfahren nach einem der vorherigen Ansprüche,
**dadurch gekennzeichnet,**
**dass** das AR-System (20) ein oder mehrere der Ergebnisse der Überprüfung dem Sicherheitsdokument (10) mittels einer optischen Einblendung optisch überlagert, insbesondere
**dass** die mittels der optischen Einblendung dem Sicherheitsdokument (10) überlagerten ein oder mehreren der Ergebnisse der Überprüfung Informationen über Unstimmigkeiten/Widersprüche auf dem Sicherheitsdokument (10), unstimmige Sicherheitsmerkmale (13), inhaltliche Informationen oder anatomisch-physiologische Merkmale umfassen.

7. Verfahren nach einem der vorherigen Ansprüche,
**dadurch gekennzeichnet,**
**dass** als Ergebnis der Überprüfung der ein oder mehreren ersten Informationen eine Klassifizierung auf Echtheit, insbesondere eine Echtheitswahrscheinlichkeit, erstellt wird, insbesondere
**dass** beim Überprüfen ein oder mehrerer der ersten Informationen auf Echtheit zunächst überprüft wird, ob ein oder mehrere Objekte vorliegen.

8. Verfahren nach einem der vorherigen Ansprüche,
**dadurch gekennzeichnet,**
**dass** die ein oder mehreren Zusatzinformationen Informationen über zeitliche Bezüge zu bereits geprüften Sicherheitsdokumenten, Hinweise auf allgemeine Gegebenheiten/Vorkommnisse, Informationen zu Ereignissen vor Ort oder mit Orts-/Personenbezug, Querverweise auf weitere Prüfungen/Sichtungen des Sicherheitsdokuments (10), Hinweise auf das Beziehungsfeld des Dokumentenhalters, Hinweise auf weitere Sicherheitsmerkmale (13) des Sicherheitsdokuments (10), Hinweise zur manuellen Überprüfung der Sicherheitsmerkmale (13) und Statistiken, umfassen.

9. Verfahren nach einem der vorherigen Ansprüche,
**dadurch gekennzeichnet,**
**dass** die ein oder mehreren Ergebnisse Ergebnisse über personenbezogene Daten, insbesondere des Namens, des Geburtsdatums oder des Geschlechts des Dokumentenhalters (30), Ausstellungsort des Sicherheitsdokuments (10) und Status des Sicherheitsdokuments (10), insbesondere Gültigkeit des Sicherheitsdokuments (10), umfassen, und/oder
**dass** bei dem Schritt der Überprüfung der ein oder mehreren ersten Informationen durch Abgleich mit einer Datenbank (40) der Dokumententyp als zumindest ein Ergebnis bestimmt wird.

10. Verfahren nach einem der vorherigen Ansprüche, das weiter den Schritt umfasst:
- Erfassen von ein oder mehreren dritten Informationen des räumlichen Umfelds.

11. Verfahren nach Anspruch 10,
**dadurch gekennzeichnet,**
**dass** ein oder mehrere der dritten Informationen visuelle, akustische, thermische oder chemische Informationen des räumlichen Umfelds sind, und/oder
**dass** ein oder mehrere der dritten Informationen mittels ein oder mehrerer Mikrophone, Feuchtigkeitssensoren, Photodetektoren oder Temperatursensoren erfasst werden, und/oder
**dass** beim Überprüfen der ein oder mehreren ersten Informationen ein Vergleich, insbesondere auf Plausibilität, ein oder mehrerer der ersten Informationen mit ein oder mehreren der dritten Informationen durch Abgleich mit der Datenbank (40) erfolgt.

12. Verfahren nach einem der vorherigen Ansprüche, das weiter den Schritt umfasst:
- Erfassen von ein oder mehreren vierten Informationen, insbesondere Positions- und/oder Lagebestimmung des AR-Systems (20) im Raum, insbesondere wobei
die ein oder mehreren vierten Informationen durch ein globales Positionsbestimmungssystem, insbesondere GPS, Galileo, GLONASS oder BeiDou, und/oder durch zumindest einen Beschleunigungssensor bestimmt werden.

13. Verwendung eines AR-Systems (20) zur Prüfung eines Sicherheitsdokuments (10) zur Durchführung des Verfahrens nach einem der Ansprüche 1 bis 12.

14. AR-System (20) zur Durchführung des Verfahrens nach einem der Ansprüche 1 bis 12, das die folgenden Komponenten aufweist:
- ein oder mehrere Erfassungseinrichtungen (22) zur Erfassung von ein oder mehreren ersten Informationen des Sicherheitsdokuments (10);
- eine Steuervorrichtung (24), wobei die Steuervorrichtung (24) derart ausgestaltet ist, dass diese die ein oder mehreren ersten Informationen durch Abgleich mit einer Datenbank (40) überprüft und ein oder mehrere der Ergebnisse der Überprüfung der ein oder mehreren ersten Informationen speichert und/oder ausgibt.

## Claims

1. Method for examining a security document (10), wherein the security document (10) is an identity document, a visa, a birth certificate, a banknote, a document of value or a credit card, having the following steps:
- detecting one or more pieces of first information of the security document (10) by means of an AR system (20), in particular data goggles;
- checking the one or more pieces of first information by comparison with a database (40), wherein the database is a central computer or a cloud made of a plurality of crosslinked, jointly calculating standalone computers;
- storing one or more of the results of the check of the one or more pieces of first information and outputting one or more of the results of the check of the one or more pieces of first information by means of the AR system (20).
- detecting one or more pieces of second information of the document holder (30), in particular a holder of the identity card, by means of the AR system (20), wherein, when checking the one or more pieces of first information, the one or more pieces of first information or one or more pieces of information from the database (40) are compared to one or more of the pieces of second information;
wherein, when checking the one or more pieces of first information, one or more pieces of additional information from the database (40) is determined as at least one result of the examination; and
wherein the one or more pieces of first information comprises information about the optical appearance of optically variable security features of the security document, which can be generated in an optically detectable manner by relief structures, in particular diffractive structures, zeroth order diffraction structures, blazed gratings, macrostructures, in particular lens structures or micro-prism structures, mirrored surfaces, matt structures, in particular anisotropic or isotropic matt structures or combinations of these structures.

2. Method according to claim 1,
**characterised in that**,
before and/or during detecting one or more of the pieces of first information of the security document (10) by means of the AR system (20), in particular data goggles, instructions are displayed about in which relative position and/or at what distance apart from the AR system (20) the security document (10) is to be held and/or moved while detecting the one or more pieces of first information.

3. Method according to one of the preceding claims,
**characterised in that**
the one or more pieces of first information comprise information about security features (13), photos (11), encoded identifiers (14) and data (15) specific to the individual, in particular name, address and date of birth.

4. Method according to one of the preceding claims,
**characterised in that**,
when detecting the one or more pieces of first information, one or more of the pieces of first information are mechanically read optically, electromagnetically, magnetically, electrically and/or electronically from the security document (10), in particular,
the step of reading comprises reading from one or more storage media (12) of the security document (10), and/or
the step of reading comprises reading one or more pieces of optical first information that cannot be visually recognised by a human observer, said information being mechanically read, in particular with one or more image detection systems, preferably IR cameras.

5. Method according to claim 1,
**characterised in that**
the one or more pieces of second information of the document holder (30) is biometric information, in particular of the head, and is ascertained by an image processing algorithm, in particular face recognition algorithm.

6. Method according to one of the preceding claims,
**characterised in that**
the AR system (20) optically superimposes one or more of the results of the check with the security document (10) by means of an optical overlay, in particular the one or more of the results of the check superimposed with the security document (10) by means of the optical overlay comprises information about discrepancies/contradictions in the security document (10), inconsistent security features (13), content-related information or anatomical-physiological features.

7. Method according to one of the preceding claims,
**characterised in that**,
as a result of the check of the one or more pieces of first information, a classification of authenticity, in particular an authenticity probability, is compiled, in particular when checking one or more of the pieces of first information for authenticity, it is initially checked as to whether one or more objects are present.

8. Method according to one of the preceding claims,
**characterised in that**
the one or more pieces of additional information comprise information about temporal references to already checked security documents, indications of general facts/occurrences, information about local incidents or with a location/individual reference, cross-references to further examinations/inspections of the security document (10), indications of the relational field of the document holder, indications of further security features (13) of the security document (10), indications for manually checking the security features (13) and statistics.

9. Method according to one of the preceding claims,
**characterised in that**
the one or more results comprise results about individual-specific data, in particular the name, date of birth or gender of the document holder (30), place of issue of the security document (10) and status of the security document (10), in particular validity of the security document (10), and/or
during the step of checking the one or more pieces of first information by comparison with a database (40), the document type is determined as at least one result.

10. Method according to one of the preceding claims, which further comprises the step of:
- detecting one or more pieces of third information of the spatial environment.

11. Method according to claim 10,
**characterised in that**
one or more of the pieces of third information are visual, acoustic, thermal or chemical information of the spatial environment, and/or
one or more of the pieces of third information are detected by means of one or more microphones, moisture sensors, photodetectors or temperature sensors, and/or
when checking the one or more pieces of first information, a comparison, in particular in terms of plausibility, of one or more of the pieces of first information with one or more pieces of third information is carried out by comparing with the database (40).

12. Method according to one of the preceding claims, which further comprises the step of:
- detecting one or more pieces of fourth information, in particular positional and/or location determination of the AR system (20) in the space, in particular wherein
the one or more pieces of fourth information are determined by a global position determination system, in particular GPS, Galileo, GLONASS or BeiDou, and/or by at least one acceleration sensor.

13. Use of an AR system (20) for examining a security document (10) for carrying out the method according to one of claims 1 to 12.

14. AR system (20) for carrying out the method according to one of claims 1 to 12, which has the following components:
- one or more detection devices (22) for detecting one or more pieces of first information of the security document (10);
- a control device (24), where the control device (24) is designed in such a way that it checks the one or more pieces of first information by comparison with a database (40) and stores and/or outputs one or more of the results of the check of the one or more pieces of first information.

## Revendications

1. Procédé de contrôle d'un document de sécurité (10), dans lequel le document de sécurité (10) est une pièce d'identité, un visa, un certificat de naissance, un billet de banque, un papier de valeur ou une carte de crédit,
avec les étapes :
- de détection d'une ou de plusieurs premières informations du document de sécurité (10) au moyen d'un système de réalité augmentée (20), en particulier de lunettes de réalité augmentée ;
- de vérification d'une ou de plusieurs premières informations par confrontation avec une base de données (40), dans lequel la base de données est un ordinateur central ou un nuage composé d'une pluralité d'ordinateurs individuels mis en réseau, calculant conjointement ;
- de stockage d'un ou de plusieurs résultats de la vérification d'une ou de plusieurs premières informations et
d'envoi d'un ou de plusieurs résultats de la vérification d'une ou de plusieurs premières informations au moyen du système de réalité augmentée (20) ;
- de détection d'une ou de plusieurs deuxièmes informations du détenteur de document (30), en particulier d'un titulaire de pièce d'identité, au moyen du système de réalité augmentée (20), dans lequel une ou plusieurs premières informations ou une ou plusieurs informations issues de la base de données (40) sont confrontées avec une ou plusieurs des deuxièmes informations lors de la vérification d'une ou de plusieurs premières informations ;
dans lequel une ou plusieurs informations supplémentaires issues de la base de données (40) sont déterminées en tant qu'au moins un résultat du contrôle lors de la vérification d'une ou de plusieurs premières informations ; et
dans lequel une ou plusieurs premières informations comprennent des informations portant sur l'aspect optique de caractéristiques de sécurité optiquement variables du document de sécurité, lesquelles sont générées de manière à pouvoir être détectées optiquement par des structures en relief, en particulier des structures diffractives, des structures de diffraction d'ordre zéro, des réseaux Blaze, des macrostructures, en particulier des structures à lentilles ou des structures à microprismes, des surfaces réfléchissantes, des structures mattes, en particulier des structures mattes anisotropes ou isotropes, ou des combinaisons desdites structures.

2. Procédé selon la revendication 1,
**caractérisé en ce**
**que** sont affichées, avant et/ou pendant la détection d'une ou de plusieurs des premières informations du document de sécurité (10), au moyen du système de réalité augmentée (20), en particulier des lunettes de réalité augmentée, des instructions sur la position relative dans laquelle et/ou la distance par rapport au système de réalité augmentée (20) à laquelle le document de sécurité (10) est à maintenir et/ou à déplacer pendant la détection d'une ou de plusieurs premières informations.

3. Procédé selon l'une quelconque des revendications précédentes,
**caractérisé en ce**
**qu'**une ou plusieurs premières informations comprennent des informations portant sur des caractéristiques de sécurité (13), des photos (11), des identifiants codés (14) et des données personnelles (15), en particulier le nom, l'adresse et la date de naissance.

4. Procédé selon l'une quelconque des revendications précédentes,
**caractérisé en ce**
**que** lors de la détection d'une ou de plusieurs premières informations, une ou plusieurs des premières informations sont lues de manière optique, électromagnétique, magnétique, électrique et/ou par une machine électronique du document de sécurité (10), en particulier
**que** l'étape de la lecture comprend la lecture depuis un ou plusieurs supports de stockage (12) du document de sécurité (10), et/ou
**que** l'étape de la lecture comprend la lecture d'une ou de plusieurs premières informations optiques ne pouvant pas être identifiées visuellement par l'observateur, lesquelles sont lues par une machine en particulier avec un ou plusieurs systèmes de détection d'image, de préférence des caméras infrarouges.

5. Procédé selon la revendication 1,
**caractérisé en ce**
**qu'**une ou plusieurs deuxièmes informations du détenteur de document (30) sont des informations biométriques en particulier de la tête, et sont définies par un algorithme de traitement d'image, en particulier un algorithme de reconnaissance faciale.

6. Procédé selon l'une quelconque des revendications précédentes,
**caractérisé en ce**
**que** le système de réalité augmentée (20) superpose optiquement un ou plusieurs des résultats de la vérification au document de sécurité (10) au moyen d'un masque optique, en particulier
**qu'**un ou plusieurs des résultats de la vérification superposés au moyen du masque optique au document de sécurité (10) comprennent des informations portant sur des incohérences/contradictions sur le document de sécurité (10), des caractéristiques de sécurité (13) incohérentes, des informations de contenu ou des caractéristiques anatomiques physiologiques.

7. Procédé selon l'une quelconque des revendications précédentes,
**caractérisé en ce**
**qu'**un classement par authenticité, en particulier une probabilité d'authenticité, est créé en tant que résultat de la vérification d'une ou de plusieurs premières informations, en particulier
**que** lors de la vérification, l'authenticité d'une ou de plusieurs premières informations est tout d'abord vérifiée pour établir si un ou plusieurs objets sont présents.

8. Procédé selon l'une quelconque des revendications précédentes,
**caractérisé en ce**
**qu'**une ou plusieurs informations supplémentaires comprennent des informations sur des liens chronologiques à des documents de sécurité déjà contrôlés, des remarques sur des occasions/faits d'ordre général, des informations concernant des événements sur site ou avec une référence à un lieu/des personnes, des références croisées à d'autres contrôles/inspections du document de sécurité (10), des remarques sur le champ relationnel du détenteur de document, des remarques sur d'autres caractéristiques de sécurité (13) du document de sécurité (10), des remarques sur la vérification manuelle des caractéristiques de sécurité (13) et des statistiques.

9. Procédé selon l'une quelconque des revendications précédentes,
**caractérisé en ce**
**qu'**un ou plusieurs résultats comprennent des résultats sur des données à caractère personnel, en particulier le nom, la date de naissance ou le sexe du détenteur de document (30), le lieu d'édition du document de sécurité (10) et le statut du document de sécurité (10), en particulier la validité du document de sécurité (10), et/ou
**que** lors de l'étape de la vérification d'une ou de plusieurs premières informations par confrontation avec une base de données (40), le type de document est défini en tant qu'au moins un résultat.

10. Procédé selon l'une quelconque des revendications précédentes, qui comprend par ailleurs l'étape :
- de détection d'une ou de plusieurs troisièmes informations de l'environnement spatial.

11. Procédé selon la revendication 10,
**caractérisé en ce**
**qu'**une ou plusieurs des troisièmes informations sont des informations visuelles, acoustiques, thermiques ou chimiques de l'environnement spatial, et/ou
**qu'**une ou plusieurs des troisièmes informations sont détectées au moyen d'un ou de plusieurs microphones, capteurs d'humidité, de photodétecteurs ou de capteurs de température, et/ou
**que** lors de la vérification d'une ou de plusieurs premières informations, une comparaison, en particulier sur la plausibilité, d'une ou plusieurs des premières informations à une ou plusieurs des troisièmes informations est effectuée par confrontation avec la base de données (40).

12. Procédé selon l'une quelconque des revendications précédentes, qui comprend par ailleurs l'étape :
- de détection d'une ou de plusieurs quatrièmes informations, en particulier une définition de positionnement et/ou de position du système de réalité augmentée (20) dans l'espace, en particulier dans lequel
une ou plusieurs quatrièmes informations sont définies par un système de définition de position mondial, en particulier par GPS, Galileo, GLONASS ou BeiDou, et/ou par au moins un capteur d'accélération.

13. Utilisation d'un système de réalité augmentée (20) pour contrôler un document de sécurité (10) pour mettre en œuvre le procédé selon l'une quelconque des revendications 1 à 12.

14. Système de réalité augmentée (20) pour mettre en œuvre le procédé selon l'une quelconque des revendications 1 à 12, qui présente les composants suivants :
- un ou plusieurs systèmes de détection (22) pour détecter une ou plusieurs premières informations du document de sécurité (10) ;
- un dispositif de commande (24), dans lequel le dispositif de commande (24) est configuré de telle manière que celui-ci vérifie une ou plusieurs premières informations par confrontation avec une base de données (40) et stocke et/ou envoie un ou plusieurs des résultats de la vérification d'une ou de plusieurs premières informations.
